# EUROPÄISCHE PATENTSCHRIFT

(11) **EP 1 252 687 B1**
(45) Veröffentlichungstag und Bekanntmachung des Hinweises auf die Patenterteilung: **03.12.2008**
(21) Anmeldenummer: 01907488.9
(22) Anmeldetag: 02.02.2001
(51) Int. Cl.: H01S 3/06

(54) **LASERVERSTÄRKERSYSTEM**
LASER AMPLIFIER SYSTEM
SYSTEME D'AMPLIFICATION LASER

(30) Priorität: 05.02.2000 DE 10005195
(43) Veröffentlichungstag der Anmeldung: 30.10.2002
(73) Patentinhaber: UNIVERSITÄT STUTTGART INSTITUT FÜR STRAHLWERKZEUGE, 70569 Stuttgart (DE)
(72) Erfinder: ERHARD, Steffen, 71126 Gäufelden (DE); GIESEN, Adolf, 71272 Renningen (DE); STEWEN, Christian, 71364 Winnenden (DE)
(74) Vertreter: Beck, Jürgen
(86) Internationale Anmeldenummer: PCT/EP2001/001129
(87) Internationale Veröffentlichungsnummer: WO 2001/057970

(56) Entgegenhaltungen:
- EP-A- 0 632 551
- DE-A- 4 008 225
- DE-A- 19 835 107
- GIESEN A ET AL: "DER SCHEIBENLASER MIT NEUEM PUMPDESIGN ERSTE ERGEBNISSE. THE THIN DISK LASER WITH A NEW PUMP DESIGN FIRST RESULTS" LASEROPTO,AT FACHVERLAG, STUTTGART,DE, 1999, Seiten 36-39, XP000917488 ISSN: 1437-3041

## Beschreibung

Die Erfindung betrifft ein Laserverstärkersystem umfassend einen ein laseraktives Medium aufweisenden Festkörper, eine Pumpstrahlungsquelle zur Erzeugung eines Pumpstrahlungsfeldes welches den Festkörper mehrfach durchsetzt, und ein Fokussierungssystem, welches mehrere, verschiedene in den Festkörper einfallende Äste des Pumpstrahlungsfeldes erzeugt und dabei mindestens einen aus dem Festkörper ausfallenden Ast in einen der in den Festkörper einfallenden und vom ausfallenden Ast verschiedenen Äste umsetzt.

Derartige Laserverstärkersysteme sind aus dem Stand der Technik, beispielsweise aus der EP 0 632 551 bekannt.

Bei diesen Laserverstärkersystemen wird der aus dem Festkörper ausfallende Ast lediglich umgelenkt und auf den Festkörper refokussiert.

Der Nachteil eines derartigen Fokussierungssystems besteht darin, daß mit diesem der Querschnitt des zu fokussierenden Pumpstrahlungsfeldes stets vergrößert wird oder erhebliche Verluste dadurch auftreten, daß ein Teil des Pumpstrahlungsfeldes nicht wieder auf den Festkörper refokussiert wird.

Insgesamt ist somit das Erzielen einer möglichst hohen Pumpleistungsstrahlungsdichte in dem Festkörper problematisch, insbesondere unter der Prämisse, daß möglichst viele Durchgänge des Pumpstrahlungsfeldes anzustreben sind, da die Absorption des laseraktiven Mediums in dem Festkörper bei einem einmaligen Durchgang der Pumpleistung gering ist.

Der Erfindung liegt daher die Aufgabe zugrunde, ein Laserverstärkersystem der gattungsgemäßen Art derart zu verbessern, daß mit möglichst geringem Aufwand eine möglichst hohe Pumpleistungsdichte im Festkörper erzeugbar ist.

Diese Aufgabe wird bei einem Laserverstärkersystem der eingangs beschriebenen Art erfindungsgemäß dadurch gelöst, daß das Fokussierungssystem mindestens eine Umlenkeinheit umfaßt, welche durch Strahlungsfeldumlenkung relativ zu einer einzigen Symmetrieebene mindestens zwei aus mindestens zwei verschiedenen, aus dem Festkörper ausfallenden Ästen des Pumpstrahlungsfeldes gebildete erste Teiläste in mindestens zwei entsprechende, lokal von den ersten Teilästen getrennt verlaufende zweite Teiläste umsetzt, aus welchen mindestens zwei in der in den Festkörper einfallenden Äste entstehen.

Der Vorteil der erfindungsgemäßen Lösung ist darin zu sehen, daß mit dieser die Möglichkeit besteht, mit einer Umlenkeinheit, welche relativ zu einer einzigen Symmetrieebene umlenkt, aus zwei verschiedenen ausfallenden Ästen des Pumpstrahlungsfeldes wieder zwei verschiedene, in den Festkörper einfallende Äste zu erzeugen.

Alternativ oder ergänzend hierzu sieht ein weiteres erfindungsgemäßes Laserverstärkersystem, das ebenfalls die eingangs gestellte Aufgabe löst, vor, daß das Fokussierungssystem zwei Umlenkeinheiten umfaßt, daß jede der Umlenkeinheiten mindestens einen aus einem ausfallenden Ast gebildeten ersten Teilast in einen zweiten, von diesem lokal verschieden verlaufenden Teilast umsetzt und daß jede der Umlenkeinheiten einen zweiten Teilast erzeugt, aus welchem einer der einfallenden Äste entsteht, der seinerseits wieder zu einem ausfallenden Ast führt, aus welchem ein auf die andere Umlenkeinheit auftreffender erster Teilast entsteht.

Der Vorteil dieser erfindungsgemäßen Ausführungsform ist darin zu sehen, daß damit die Möglichkeit besteht, in einfacher Art und Weise eine Vielzahl von verschiedenen, in den Festkörper einfallenden fokussierten Ästen zu erzeugen.

Bei einer weiteren alternativen oder ergänzenden Ausführungsform der erfindungsgemäßen Lösung ist vorgesehen, daß das Fokussierungssystem eine erste Umlenkeinheit und eine zweite Umlenkeinheit umfaßt und daß die beiden Umlenkeinheiten, jeweils durch Strahlungsfeldumlenkung relativ zu einer einzigen Symmetrieebene, insgesamt mindestens drei aus mindestens drei verschiedenen ausfallenden Ästen des Pumpstrahlungsfeldes gebildete erste Teiläste in mindestens drei entsprechende, lokal von den ersten Teilästen getrennt verlaufende zweite Teiläste umsetzen, aus welchen drei einfallende Äste entstehen.

Der Vorteil dieser Lösung ist ebenfalls darin zu sehen, daß diese eine möglichst einfache Möglichkeit schafft, möglichst viele einfallende Äste zu erzeugen.

Alternativ und/oder ergänzend zu den vorstehend beschriebenen erfindungsgemäßen Lösungen ist bei einer besonders bevorzugten Ausführungsform vorgesehen, daß das Fokussierungssystem mindestens eine Umlenkeinheit aufweist, daß die Umlenkeinheit aus einem der ersten Teiläste einen bezüglich einer Mittelachse des Fokussierungssystems um einen derartigen Winkelabstand versetzt liegenden zweiten Teilast formt, daß im Winkelbereich zwischen diesem ersten Teilast und diesem daraus gebildeten zweiten Teilast mindestens ein weiterer Teilast liegt.

Auch diese Lösung hat den Vorteil, daß sie in besonders einfacher Weise das Erzeugen einer möglichst großen Zahl von einfallenden, auf den Festkörper fokussierten Ästen erlaubt.

Ergänzend oder alternativ zu den vorstehend beschriebenen Lösungen sieht eine weitere bevorzugte Ausführungsform vor, daß das Fokussierungssystem eine erste Umlenkeinheit, welche das Pumpstrahlungsfeld relativ zu einer ersten Symmetrieebene umlenkt, und eine zweite Umlenkeinheit, welche das Pumpstrahlungsfeld relativ zu einer zweiten Symmetrieebene umlenkt, aufweist und daß die Symmetrieebenen einen Winkel miteinander einschließen, der 180° oder 360° geteilt durch die Summe der bei einem Durchlauf des Pumpstrahlungsfeldes durch das Fokussierungssystem und den Festkörper auftretenden einfallenden und ausfallenden Äste entspricht.

Ein Durchlauf des Pumpstrahlungsfeldes durch die Fokussierungsoptik bedeutet, daß das Pumpstrahlungsfeld sich mit einer Ausbreitungsrichtung durch die Fokussierungsoptik hindurch ausbreitet und auf die jeweiligen optischen Elemente einmal auftrifft.

Hinsichtlich der Ausrichtung der Symmetrieebene der Umlenkeinheiten wurden bislang keine näheren Angaben gemacht. So ist es, um insbesondere möglichst einfache Strahlführungsverhältnisse zu haben, vorteilhaft, wenn die Symmetrieebenen parallel zu der Mittelachse verlaufen.

Besonders günstig ist es für die Anordnung der einzelnen Teiläste und Äste, wenn die Symmetrieebenen durch die Mittelachse hindurch verlaufen.

Hinsichtlich der Anordnung der ersten Teiläste im Pumpstrahlungsfeld wurden bislang keine näheren Angaben gemacht. Besonders günstig ist es dabei, wenn die ersten Teiläste im Pumpstrahlungsfeld getrennt voneinander verlaufen, das heißt, sich maximal berühren, vorzugsweise mindestens einen geringen Abstand voneinander aufweisen.

Besonders günstig ist es dabei, wenn die ersten Teiläste relativ zueinander in Winkelabständen um eine Mittelachse des Fokussierungssystems herum angeordnet sind.

Auch hinsichtlich der zweiten Teiläste ist es vorteilhaft, wenn diese getrennt voneinander verlaufen.

Besonders günstig ist es dabei, wenn die zweiten Teiläste auch von den ersten Teilästen getrennt verlaufen.

Eine besonders günstige Lösung sieht vor, daß die zweiten Teiläste relativ zueinander und relativ zu den ersten Teilästen in Winkelabständen um die Mittelachse des Fokussierungssystems angeordnet sind.

Dabei können die Winkelabstände klein sein, vorteilhaft ist es jedoch, daß mindestens ein kleiner Winkelabstand besteht um somit die Teiläste jeweils getrennt voneinander anzuordnen.

Insbesondere ist bei allen Ausführungsformen der erfindungsgemäßen Lösung, bei welcher mindestens drei erste Teiläste und mindestens drei zweite Teiläste auftreten, vorgesehen, daß die mindestens drei ersten Teiläste und die mindestens drei zweiten Teiläste bei einem Durchlauf des Pumpstrahlungsfeldes durch das Fokussierungssystem und den Festkörper auftreten, wobei unter einem Durchlauf durch das Fokussierungssystem zu verstehen ist, daß das Pumpstrahlungsfeld sich in einer Richtung durch das Fokussierungssystem hindurch ausbreitet und dabei die verschiedenen Äste und Teiläste bildet.

Eine besonders vorteilhafte Anordnung der ersten und zweiten Teiläste sieht vor, daß die bei einem Durchlauf des Pumpstrahlungsfeldes durch die Astfokussierungssystem entstehenden ersten und zweiten Teiläste überlappungsfrei im Raum um die Mittelachse des Fokussierungssystems herum angeordnet sind.

Besonders vorteilhaft ist es insbesondere im Hinblick auf den noch zusätzlich erforderlichen Pumpstrahlungsast, wenn die ersten und zweiten Teiläste sowie der Pumpstrahlungsast eines Durchlaufs des Pumpstrahlungsfeldes überlappungsfrei im Raum um die Mittelachse des Fokussierungssystems herum angeordnet sind.

Eine besonders günstige Art der Anordnung der ersten und zweiten Teiläste sieht vor, daß die ersten und zweiten Teiläste jeweils in Raumsegmenten um die Mittelachse des Fokussierungssystems herum angeordnet sind und sich innerhalb der Raumsegmente quer zu ihrer Ausbreitungsrichtung ausdehnen, jedoch nicht über die diesen zugeordneten Raumsegmente hinausreichen.

Eine besonders vorteilhafte Verteilung ist dann erhältlich, wenn jedes der Raumsegmente sich ungefähr über denselben Winkelbereich um die Mittelachse erstreckt.

Eine besonders gleichmäßige Verteilung der in den Festkörper einfallenden fokussierten Äste ist dann erhältlich, wenn die Raumsegmente der ersten und zweiten Teiläste sowie das Raumsegment des Pumpstrahlungsastes im wesentlichen die Mittelachse umschließen.

Hinsichtlich der Ausbildung des Fokussierungssystems im einzelnen wurden im Zusammenhang mit der bisherigen Erläuterung der einzelnen Ausführungsbeispiele keine näheren Angaben gemacht. So sieht eine vorteilhafte Lösung vor, daß das Fokussierungssystem einen aus dem Festkörper ausfallenden Ast in einen zwischenkollimierten Ast umformt und den zwischenkollimierten Ast wiederum in einen erneut in den Festkörper einfallenden und auf diesen fokussierten Ast umformt. Diese Lösung hat den großen Vorteil, daß damit präzise Abbildungsverhältnisse geschaffen werden können und insbesondere der Strahlquerschnitt im Verlauf der Refokussierung keine Aufweitung erfährt.

Prinzipiell können die Umlenkeinheiten so angeordnet sein, daß sie auf jeden der Äste wirken. Besonders günstig ist es, wenn die zwischenkollimierten Äste die ersten und zweiten Äste bilden, die auf die Umlenkeinheiten einfallen oder von diesen herkommen, so daß die Umlenkung im Bereich der kollimierten Äste erfolgt.

Hinsichtlich des Verlaufs der ersten und zweiten Teiläste wurden im Zusammenhang mit der bisherigen Erläuterung der einzelnen Ausführungsbeispiele keine näheren Angaben gemacht.

So lassen sich besonders vorteilhafte optische Abbildungsverhältnisse dann erreichen, wenn die ersten und zweiten Teiläste parallel zueinander verlaufen.

Noch günstiger ist es, wenn die ersten und zweiten Teiläste parallel zur Mittelachse verlaufen, da dann auch die kollimierenden und fokussierenden Elemente in gleicher Weise relativ zur Mittelachse ausgerichtet sein können.

Eine hinsichtlich der geometrischen Verhältnisse besonders günstige Lösung sieht dabei vor, daß die ersten und zweiten Teiläste in ungefähr demselben radialen Abstand um die Mittelachse herum angeordnet sind. In diesem Fall lassen sich die fokussierenden und kollimierenden Elemente besonders günstig relativ zur Mittelachse anordnen, um möglichst einheitliche Abbildungsverhältnisse zu erreichen.

Die vorstehenden Angaben hinsichtlich der ersten und zweiten Teiläste gelten vorteilhafterweise auch für den Pumpstrahlungsast, so daß auch dieser vorzugsweise parallel zu den ersten und zweiten Teilästen ausgerichtet ist und noch vorteilhafter auch parallel zur Mittelachse.

Besonders günstig ist es, wenn auch der Pumpstrahlungsast bereits in ungefähr demselben radialen Abstand von der Mittelachse verläuft als die ersten und zweiten Teiläste.

Hinsichtlich des Aufbaus des Fokussierungssystems sind die unterschiedlichsten Lösungen denkbar. Beispielsweise können die Fokussierung und Umlenkung mit denselben Elementen erfolgen. Besonders günstig ist es jedoch, wenn das Fokussierungssystem kollimierende und fokussierende Elemente aufweist, welche die ausfallenden Äste in zwischenkollimierte Äste bzw. die zwischenkollimierten Äste in einfallende Äste umformen.

Derartige kollimierende und fokussierende Elemente können als Einzelelemente für jede Umformung eines ausfallenden Astes in einen zwischenkollimierten Ast oder jedes zwischenkollimierten Astes in einen einfallenden fokussierten Ast vorgesehen sein. Besonders günstig ist es, wenn alle kollimierenden und fokussierenden Elemente identisch ausgebildet sind.

Hinsichtlich der Ausbildung der kollimierenden Elemente wurden im einzelnen bislang keine näheren Angaben gemacht. So wäre es beispielsweise denkbar, als kollimierende und fokussierende Elemente Linsen einzusetzen.

Ein besonders günstiger Aufbau läßt sich jedoch dann erreichen, wenn die kollimierenden und fokussierenden Elemente durch Hohlspiegel gebildet sind.

Derartige Hohlspiegel können beispielsweise im Querschnitt parabolische oder im Querschnitt kreisbogenförmige Spiegel sein.

So könnten die Spiegel prinzipiell so ausgebildet sein, daß sie einen Linienfokus erzeugen. Noch besser ist es, wenn die Hohlspiegel so ausgebildet sind, daß sie einen im wesentlichen punktförmigen Fokus erzeugen.

Im einfachsten Fall sind die kollimierenden und fokussierenden Elemente so ausgebildet, daß diese Segmente eines rotationssymmetrischen Spiegels sind, wobei der Spiegel vorzugsweise rotationssymmetrisch zur Mittelachse des Fokussierungssystems angeordnet ist.

Noch günstiger ist es jedoch, wenn die kollimierenden und fokussierenden Elemente Segmente eines durchgehenden rotationssymmetrischen Hohlspiegels sind.

Hinsichtlich der Anordnung der Umlenkeinheiten relativ zu den kollimierenden und fokussierenden Elementen ist vorzugsweise vorgesehen, daß die Umlenkeinheiten so relativ zu den kollimierenden und fokussierenden Elementen angeordnet sind, daß sie die zwischenkollimierten Äste von einem kollimierenden Element auf ein fokussierendes Element umlenken.

Hinsichtlich des nach einem Durchlauf durch das Fokussierungssystem entstehenden Astes des Pumpstrahlungsfeldes wurden bislang keine näheren Angaben gemacht. So wäre es beispielsweise denkbar, den letzten, aus dem Festkörper ausfallenden Astes einfach ungenutzt zu lassen.

Besonders vorteilhaft ist es jedoch, wenn nach einem Durchlauf des Pumpstrahlungsfeldes durch das Fokussierungssystem ein kollimierter Ast gebildet wird, denn ein derartiger kollimierter Ast läßt sich noch mit der noch vorhandenen Leistung weiter einsetzen.

Eine günstige Lösung sieht dabei vor, daß der nach einem Durchlauf durch das Fokussierungssystem gebildete kollimierte erste Teilast in einen zweiten, mit dem ersten Teilast im wesentlichen deckungsgleichen Teilast umgesetzt wird.

Ein derartiges Umsetzen eines ersten Teilastes in einen im wesentlichen deckungsgleichen zweiten Teilast kann entweder dadurch erfolgen, daß der zweite, mit dem ersten Teilast im wesentlichen deckungsgleiche Teilast durch Rückreflexion an einer ebenen Reflexionsfläche entsteht.

Alternativ dazu ist es erfindungsgemäß möglich, daß der zweite und mit dem ersten Teilast im wesentlichen deckungsgleiche Teilast durch Reflexion an einem symmetrieerhaltenden umlenkenden Reflexionssystem erfolgt, wobei die Möglichkeit besteht, den zweiten Teilast seitenverkehrt zum ersten Teilast zurücklaufen zu lassen.

Eine besonders vorteilhafte Lösung des erfindungsgemäßen Laserverstärkersystems sieht vor, daß das Fokussierungssystem maximal zwei dem Festkörper zugeordnete Umlenkeinheiten aufweist, welche einen ersten, aus einem aus diesem Festkörper ausfallenden Ast gebildeten Teilast in einen zweiten, einen der in diesen Festkörper einfallenden Äste bildenden Teilast umsetzen, so daß stets derselbe Festkörper durch die beiden Umlenkeinheiten mehrfach ausgeleuchtet wird.

Das erfindungsgemäße Laserverstärkersystem ist jedoch nicht auf Lösungen mit einem einzigen Festkörper beschränkt.

Eine vorteilhafte Lösung sieht vor, daß dieses mindestens zwei Festkörper umfaßt, und das mindestens eine dritte Umlenkeinheit vorgesehen ist, welche einen Ast des Pumpstrahlungsfeldes quer zu einer sich zwischen den Festkörpern erstreckenden weiteren Symmetrieebene umlenkt.

Der Vorteil dieser Lösung ist darin zu sehen, daß damit entweder mit demselben Pumpstrahlungsfeld zwei unabhängige Laser gepumpt werden können oder daß die Möglichkeit besteht, die beiden Festkörper so anzuordnen, daß sie zur Verstärkung eines diese durchsetzenden Laserstrahlungsfeldes dienen und somit die Pumpstrahlung optimal ausgenutzt werden kann.

Hinsichtlich der Ausbildung der erfindungsgemäß verwendeten Umlenkeinheiten wurden bislang keine näheren Angaben gemacht. So sieht ein vorteilhaftes Ausführungsbeispiel vor, daß die Umlenkeinheit zwei in einem Winkel zueinander verlaufende Reflexionsflächen umfaßt. Die Reflexionsflächen können dabei im Abstand voneinander verlaufen.

Vorzugsweise ist jedoch vorgesehen, daß die Reflexionsflächen längs einer Linie aneinander anstoßen.

Die Reflexionsflächen können prinzipiell an unterschiedlichen Trägern angeordnet sein. Ein besonders vorteilhaftes Ausführungsbeispiel sieht vor, daß die Reflexionsflächen an einer Reflektoreinheit angeordnet sind.

Vorzugsweise stellt eine derartige Reflektoreinheit ein Prisma dar.

Hinsichtlich der Anordnung der ersten und zweiten Umlenkeinheiten wurden bislang keine näheren Angaben gemacht. So sieht eine vorteilhafte Lösung vor, daß die erste und zweite Umlenkeinheit eine Ausnehmung bilden, durch welche die in den Festkörper einfallenden oder aus diesem ausfallenden Äste hindurchtreten, so daß sämtliche einfallenden und ausfallenden Äste in Richtung der Mittelachse des Fokussierungssystems verlaufen und auf den vorzugsweise symmetrisch zur Mittelachse verlaufenden Festkörper treffen.

Um ferner in einfacher Weise den Pumpstrahlungsast zuführen zu können, ist vorzugsweise vorgesehen, daß die Umlenkeinheiten eine Ausnehmung bilden, durch welche ein Pumpstrahlungsast in das Fokussierungssystem eintritt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels eines erfindungsgemäßen Laserverstärkersystems von vorne unten;
- Fig. 2: eine perspektivische Ansicht des erfindungsgemäßen Laserverstärkersystems von vorne oben;
- Fig. 3: eine perspektivische Ansicht eines erfindungsgemäßen Laserverstärkersystems von hinten;
- Fig. 4: eine Teilansicht ähnlich Fig. 2 zur Demonstration des ersten fokussierten einfallenden Astes, des ersten defokussierten ausfallenden Astes und des ersten kollimierten Astes;
- Fig. 5: eine Ansicht ähnlich Fig. 2 zur Demonstration des zweiten fokussierten einfallenden Astes und des zweiten defokussierten ausfallenden Astes sowie des zweiten kollimierten Astes;
- Fig. 6: eine Ansicht ähnlich Fig. 2 zur Demonstration des dritten fokussierten Astes, des dritten fokussierten einfallenden Astes, des dritten defokussierten ausfallenden Astes und des dritten kollimierten Astes;
- Fig. 7: eine Ansicht ähnlich Fig. 2 zur Demonstration des vierten fokussierten einfallenden Astes, des vierten defokussierten ausfallenden Astes und des vierten kollimierten Astes;
- Fig. 8: eine perspektivische Ansicht von hinten in Anlehnung an die Ansicht in Fig. 3 allerdings ohne Umlenkeinheiten zur Demonstration des Verlaufs des kollimierten Pumpstrahlungsastes, des ersten fokussierten einfallenden Astes, des ersten defokussierten ausfallenden Astes und des ersten kollimierten Astes;
- Fig. 9: eine Ansicht ähnlich Fig. 8 zur Demonstration des Verlaufs des zweiten fokussierten einfallenden Astes, des zweiten defokussierten ausfallenden Astes und des zweiten kollimierten Astes;
- Fig. 10: eine Ansicht ähnlich Fig. 8 zur Demonstration des dritten fokussierten einfallenden Astes, des dritten defokussierten ausfallenden Astes und des dritten kollimierten Astes;
- Fig. 11: eine Ansicht ähnlich Fig. 8 zur Demonstration des Verlaufs des vierten fokussierten einfallenden Astes, des vierten fokussierten ausfallenden Astes und des vierten kollimierten Astes;
- Fig. 12: eine schematische Draufsicht auf die Umlenkeinheiten des ersten Ausführungsbeispiels zusammen mit einer Darstellung von Raumsegmenten, in welchen die kollimierten Äste verlaufen;
- Fig. 13: eine Darstellung ähnlich Fig. 12 bei einem zweiten Ausführungsbeispiel;
- Fig. 14: eine Darstellung ähnlich Fig. 12 bei einem dritten Ausführungsbeispiel;
- Fig. 15: eine Darstellung ähnlich Fig. 12 bei einem vierten Ausführungsbeispiel;
- Fig. 16: eine Darstellung ähnlich Fig. 12 bei einem fünften Ausführungsbeispiel;
- Fig. 17: eine Darstellung ähnlich Fig. 12 bei einem sechsten Ausführungsbeispiel und
- Fig. 18: eine Darstellung ähnlich Fig. 12 bei einem siebten Ausführungsbeispiel.

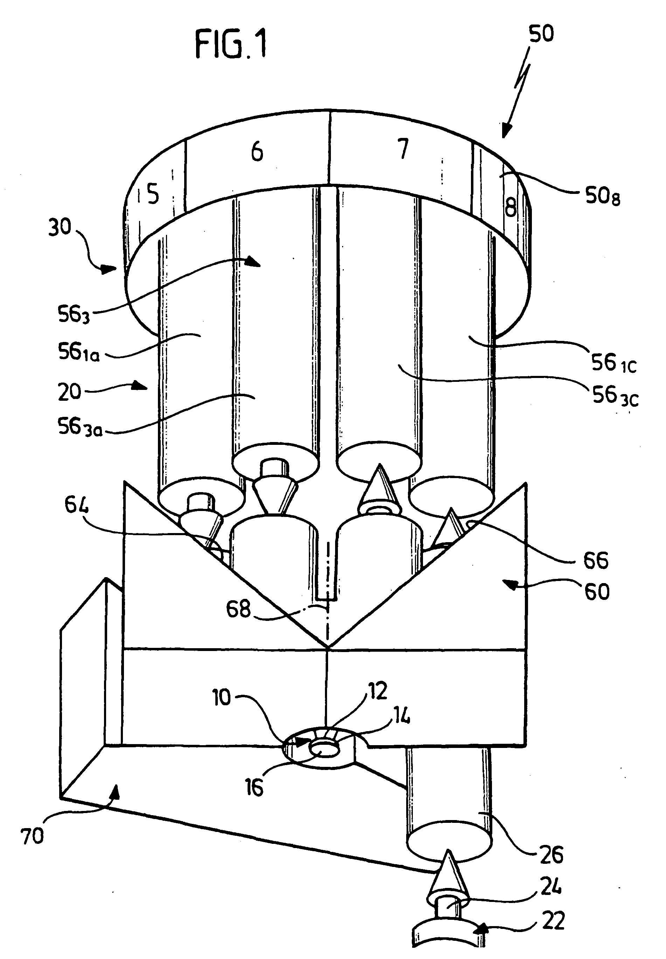

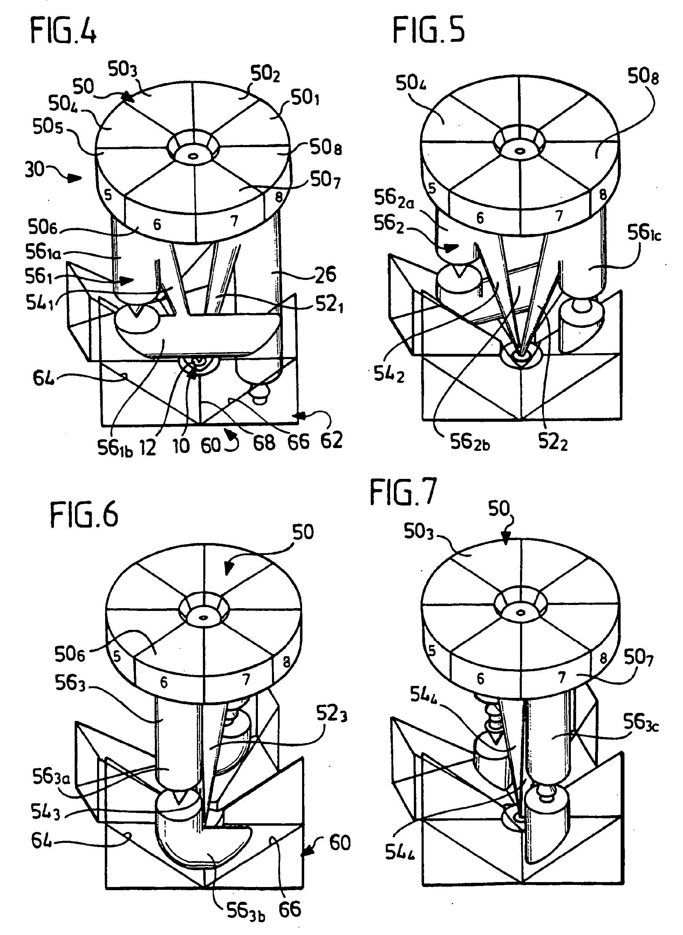

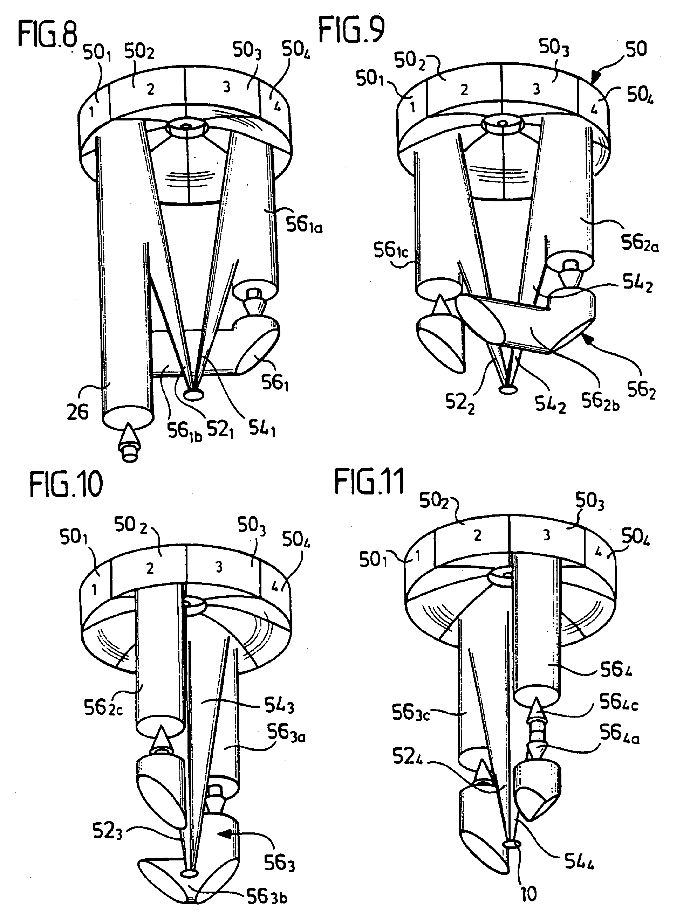

Ein erstes Ausführungsbeispiel eines erfindungsgemäßen Laserverstärkersystems, dargestellt in Fig. 1 bis 12 umfaßt einen scheibenförmigen, ein laseraktives Medium aufweisenden Festkörper 10, welcher eine frontseitige Flachseite 12 und eine rückseitige Flachseite 14 aufweist, die entweder eben oder gewölbt sein können, und welcher mit seiner rückseitigen Flachseite 14 auf einem Reflektor 16 aufliegt. Vorzugsweise ist dabei der Reflektor 16 als Schicht auf die rückseitige Flachseite 14 aufgetragen.

Ferner ist vorzugsweise der Festkörper 10 über den Reflektor 16 und somit die rückseitige Flachseite 14 gekühlt, wobei eine derartige Kühlung insbesondere durch einen Kühlfinger realisierbar ist, auf welchem der Reflektor 16 mit Wärmekontakt aufliegt.

Über die frontseitige Flachseite 12 wird in den Festkörper 10 ein Pumpstrahlungsfeld als Ganzes mit 20 bezeichnet eingekoppelt, welches durch ein als Ganzes mit 30 bezeichnetes Fokussierungssystem und den Reflektor 16 definiert ist und dabei mehrfach durch den Festkörper 10 hindurchtritt, so daß das laseraktive Medium im Festkörper 10 durch das Pumpstrahlungsfeld 20 bei jedem Durchgang durch den Festkörper 10 anregbar ist.

Das laseraktive Medium im Festkörper 10 erzeugt ein Laserstrahlungsfeld 40, welches beispielsweise ebenfalls vom Reflektor 16 reflektiert wird, durch die frontseitige Flachseite 12 des Festkörpers 10 austritt und sich in Richtung einer Mittelachse 42 des Laserverstärkersystems ausbreitet, wobei beispielsweise für das Laserstrahlungsfeld 40 ein eigene Optik, beispielsweise ein Resonator oder eine das Laserstrahlungsfeld 40 mehrfach reflektierende Optik, vorgesehen ist, so daß das Laserstrahlungsfeld 40 ebenfalls mehrfach den Festkörper 10 durchsetzt.

Ein derartiges Laserverstärkungssystem ist beispielsweise vom Grundprinzip her in der EP 0 632 551 beschrieben, auf welche hinsichtlich der Arbeitsweise des Laserverstärkersystems, der Anordnung des Festkörpers 10 und des Reflektors 16 sowie der Kühlung desselben vollinhaltlich Bezug gekommen wird.

Eine zur Erzeugung des Pumpstrahlungsfeldes 20 vorgesehene Pumpstrahlungsquelie 22 ist beispielsweise ein Laser, vorzugsweise ein Halbleiterlaser, dessen Laserstrahlung 24 über ein Strahlführungssystem, beispielsweise ein Abbildungssystem oder ein Lichtleitersystem, dem erfindungsgemäßen Laserverstärkersystem unter Bildung eines kollimierten Pumpstrahlungsastes 26 zugeführt wird, welcher ein erstes Raumsegment 32₁ des Fokussierungssystems 30 durchsetzt und auf ein fokussierendes Element, beispielsweise ein erstes Segment 50₁ eines als Ganzes mit 50 bezeichneten Parabolspiegels, trifft, welcher Teil des Fokussierungssytems 30 ist.

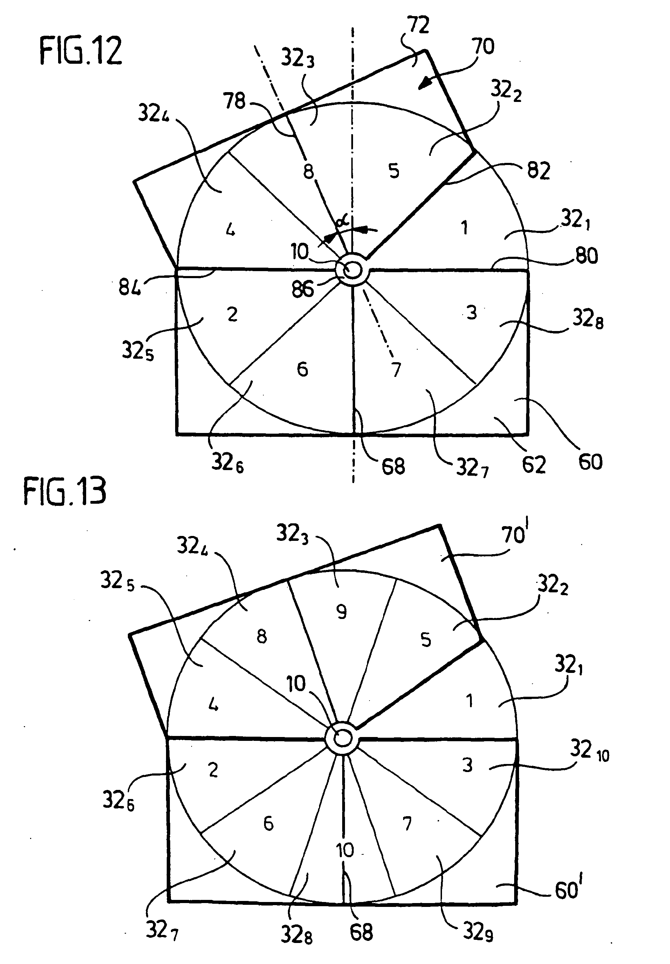

Von dem Segment 50₁ des Parabolspiegels 50 wird aus dem Pumpstrahlungsast 26 ein dritter einfallender Ast 52₁ gebildet, welcher auf den Festkörper 10 fokussiert ist, durch die frontseitige Flachseite 12 in diesen eintritt, den Festkörper 10 durchdringt und vom Reflektor 16 wieder reflektiert wird, so daß ein erster ausfallender Ast 54₁ entsteht, welcher sich als defokussierter Ast in Richtung des Parabolspiegels 50 ausbreitet und auf ein kollimierendes Element, beispielsweise ein fünftes Segment 50₅ des Parabolspiegels 50, trifft. Dieses fünfte Segment 50₅ formt aus dem ersten ausfallenden Ast 54₁ einen ersten kollimierten Ast 56₁ des Pumpstrahlungsfeldes 20, welcher sich ausgehend von dem fünften Segment 50₅ des Parabolspiegels 50 in Form eines sich parallel zur Mittelachse 42 in einem fünften Raumsegment 32₅ (Fig. 12) ausbreitenden ersten Teilastes 56₁ₐ ausgehend von dem Parabolspiegel 50 in Richtung einer ersten Umlenkeinheit 60 ausbreitet, welche beispielsweise durch ein Prisma 62 gebildet ist, welches zwei Reflektorflächen 64 und 66 umfaßt, die einen Winkel von 90° miteinander einschießen und symmetrisch zu einer Symmetrieebene 68 angeordnet sind, die parallel zur Mittelachse 42 und durch diese hindurch verläuft.

Der im Raumsegment 32₅ verlaufende erste Teilast 56₁ₐ des kollimierten Astes 56₁ trifft dabei auf die Reflektorfläche 64, welche durch Reflexion den umgelenkten Ast 56_{1b} des kollimierten Astes 56₁ bildet, der seinerseits durch Reflexion an der Reflektorfläche 66 wiederum parallel zum Teilast 56₁ₐ, jedoch im Abstand von diesem in Richtung des Parabolspiegels 50 reflektiert wird und sich in Form eines zweiten Teilastes 56_{1c} in einem achten Raumsegment 32₈ in Richtung des Parabolspiegels 50 ausbreitet und schließlich auf ein fokussierendes Element, beispielsweise das achte Segment 50₈ des Parabolspiegels 50, auftrifft, so daß insgesamt in dem kollimierten Ast 56₁ die Teiläste 56₁ₐ und 56_{1c} bezüglich der Mittelachse 42 in einem Winkelabstand voneinander verlaufen und somit insgesamt eine Umlenkung des kollimierten Astes 56₁ von dem fünften Raumsegment 32₅ zum achten Raumsegment 32₈ erfolgt.

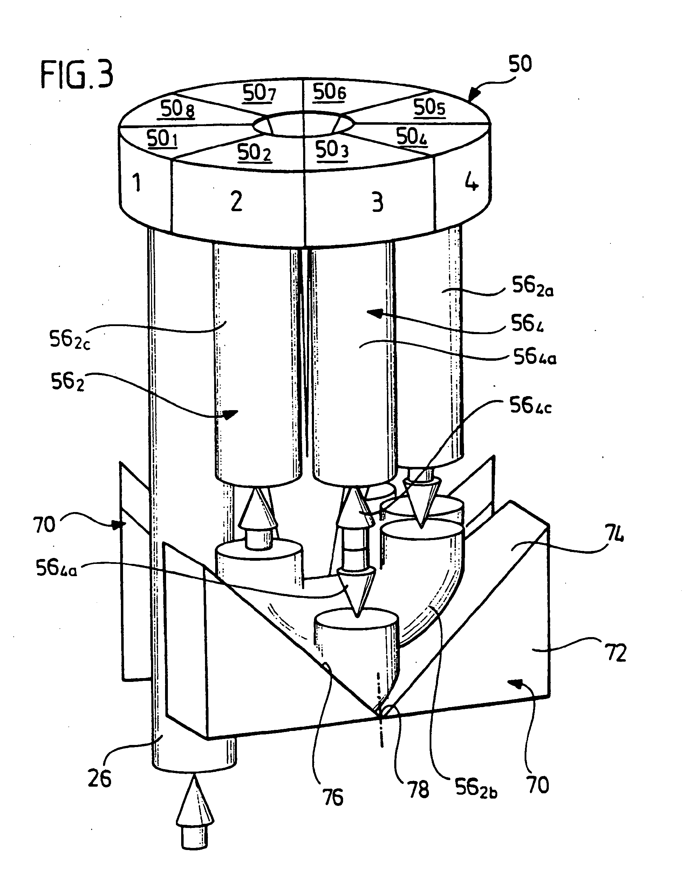

Das achte Segment 50₈ des Parabolspiegels 50 bildet aus dem Ast 56_{1c} des kollimierten Astes 56₁ einen zweiten einfallenden und fokussierten Ast 52₂ welcher seinerseits wiederum auf den Festkörper 10 auftrifft, durch diesen hindurchtritt und vom Reflektor 16 reflektiert wird, so daß ein zweiter ausfallender defokussierter Ast 54₂ entsteht, der auf ein weiteres kollimierendes Element, beispielsweise das Segment 50₄ des Parabolspiegels 50, auftrifft, das aus dem ausfallenden Ast 54₂ den zweiten kollimierten Ast 56₂ bildet, welcher mit seinem Teilast 56₂ₐ sich in einem vierten Raumsegment 32₄ (Fig. 12) in Richtung einer zweiten Umlenkeinheit 70 (dargestellt insbesondere in Fig. 3) ausbreitet, welche ebenfalls als Prisma 72 ausgebildet ist und Reflektorflächen 74 und 76 aufweist, die einen Winkel von 90° miteinander einschließen und symmetrisch zu einer Symmetrieebene 78 angeordnet sind, welche parallel zur Mittelachse 42 und durch diese hindurch verläuft. Die Symmetrieebene 78 ist jedoch, wie in Fig. 12 dargestellt, gegenüber der Symmetrieebene 68 in einem Winkel α angeordnet, welcher 22,5° beträgt.

Damit erfolgt durch die Umlenkeinheit 70 ein Umlenken des zweiten kollimierten Astes 56₂ über den umgelenkten Teilast 56_{2b} symmetrisch zur Symmetrieebene 78, so daß die Reflexionsflächen 74 und 76 einen zweiten Teilast 56_{2c} erzeugen, welcher parallel zum Teilast 56₂ₐ in einem zweiten Raumsegment 32₂ verläuft, auf ein fokussierendes Element in Form des zweiten Segments 50₂ des Parabolspiegels 50 auftrifft und somit ebenfalls gegenüber dem Teilast 56₂ₐ bezüglich der Mittelachse 42 um einen Winkelabstand versetzt angeordnet ist.

Das zweite Segment 50₂ formt aus dem Teilast 56_{2c} des kollimierten Astes 56₂ den dritten einfallenden und auf den Festkörper 10 fokussierten Ast 52₃, welcher den Festkörper 10 durchsetzt, am Reflektor 16 reflektiert wird, so daß der dritte ausfallende Ast 54₃ entsteht, welcher auf das ein kollimierendes Element darstellende sechste Segment 50₆ des als Ganzes mit 50 bezeichneten Parabolspiegels auftrifft, welches den dritten kollimierten Ast 56₃ bildet, welcher seinerseits wiederum mit dem ersten Teilast 56₃ₐ sich in einem sechsten Raumsegment 32₆ (Fig. 12) in Richtung wiederum der Umlenkeinheit 60 ausbreitet, so daß durch die Reflexionsflächen 64 und 66 über die Bildung des umgelenkten Teilastes 56_{3b} der zweite Teilast 56_{3c} entsteht, welcher sich in einem siebten Raumsegment 32₇ (Fig. 12) in Richtung des Parabolspiegels 50 ausbreitet und auf das ein fokussierendes Element darstellende Segment 50₇ desselben trifft, wobei die Teiläste 56₃ₐ und 56_{3c} sich wiederum parallel zueinander und parallel zur Mittelachse 42 ausbreiten.

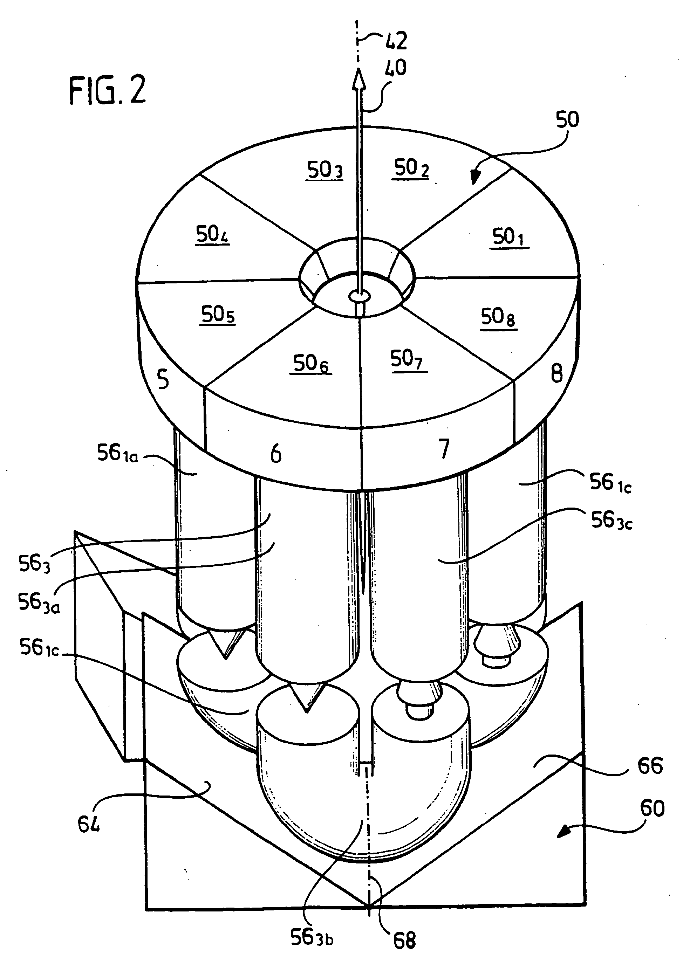

Der dritte kollimierte Ast 56₃ verläuft dabei, wie in Fig. 1 und 2 dargestellt so, daß alle Teiläste 56₃ₐ, 56_{3b} und 56_{3c} in einem die Raumsegmente 32₆ und 32₇ umfassenden Winkelbereich zwischen den Teilästen 56₁ₐ und 56_{1c} des ersten kollimierten Astes liegen, so daß sich der erste kollimierte Ast 56₁ und der dritte kollimierte Ast 56₃, obwohl sie beide durch die Umlenkeinheit 60 umgelenkt werden, nicht überlappen, jedoch beide eine Umlenkung symmetrisch zur Symmetrieebene 68 erfahren.

Durch das Segment 50₇ des Parabolspiegels 50 erfolgt die Bildung eines vierten einfallenden Astes 52₄, welcher auf den Festkörper 10 auftrifft, vom Reflektor 16 reflektiert wird, so daß der vierte ausfallende Ast 54₄ entsteht, welcher auf das ein kollimierendes Element darstellende dritte Segment 50₃ des Parabolspiegels 50 auftrifft, welches den vierten kollimierten Ast 56₄ in einem dritten Raumsegment 32₃ (Fig. 12) erzeugt. Damit ist ein Durchlauf des Pumpstrahlungsfeldes 20 durch die Refokussierungsoptik 30 und den Festkörper 10 beendet.

Dadurch, daß der vierte kollimierte Ast 56₄ symmetrisch zur Symmetrieebene 78 verläuft, kann dieser bezogen auf den gesamten kollimierten Ast in sich selbst zurückreflektiert werden, wobei allerdings dadurch, daß der vierte kollimierte Ast 56₄ mit seinem ersten Teilast 56₁ₐ je zur Hälfte auf die Reflexionsfläche 74 und zur Hälfte auf die Reflexionsfläche 76 auftrifft der rücklaufende Teilast 56_{4c} gegenüber dem ersten Teilast 56₄ₐ bezogen auf die Symmetrieebene 78 seitenverkehrt verläuft.

Ferner setzt das Erzeugen des rücklaufenden zweiten Teilastes 56_{4c} voraus, daß die Reflexionsflächen 74 und 76 aneinander anstoßen und zwar längs einer in der Symmetrieebene 78 verlaufenden Berührungslinie.

Durch diesen zurücklaufenden Teilast 56_{4c} besteht die Möglichkeit, das Pumpstrahlungsfeld 20 erneut über einen weiteren Durchlauf durch die Refokussierungsoptik 30 und durch den Festkörper 10 hindurchlaufen zu lassen, wobei sich der Weg des Pumpstrahlungsfeldes umkehrt und aus den vier ausfallenden defokussierten Ästen 54₁ bis 54₄ einfallende fokussierte Äste und aus den einfallenden fokussierten Ästen 52₁ bis 52₄ ausfallende defokussierte Äste werden.

Somit besteht die Möglichkeit, bei dem ersten Ausführungsbeispiel das Pumpstrahlungsfeld 20 insgesamt 16 mal durch den Festkörper 10 hindurchtreten zu lassen, nämlich dadurch, daß die vier einfallenden Äste 52₁ bis 52₄ des ersten Durchlaufs und die vier ausfallenden Äste 54₁ bis 54₄ des ersten Durchlaufs acht Durchgänge ergeben und der zweite Durchlauf ebenfalls acht Durchgänge ergeben.

In Fig. 12 ist die Reihenfolge, in welcher die einzelnen Raumsegmente 32₁ bis 32₈ durchlaufen werden, durch die Zahlen 1 bis 8 in den einzelnen Raumsegmenten 32 dargestellt, das heißt, daß der Pumpast 26 auf das Raumsegment 32₁ trifft, dann nach Ausbildung des ersten einfallenden fokussierten Astes 52₁ und des ersten ausfallenden defokussierten Astes 54₁ die Bildung des ersten kollimierten Astes 56₁ erfolgt, welcher zunächst im Raumsegment 32₅ und nach Umlenkung durch die erste Umlenkeinheit 60 im Raumsegment 32₈ verläuft und so weiter, bis schließlich der vierte kollimierte Ast 56₄ symmetrisch zur Symmetrieebene 78 auf die zweite Umlenkeinheit 70 trifft und von dieser in sich selbst, jedoch seitenverkehrt reflektiert wird.

Vorzugsweise sind beim ersten Ausführungsbeispiel, wie insbesondere in Fig. 12 deutlich dargestellt, die erste Umlenkeinheit 60 und die zweite Umlenkeinheit 70 so ausgebildet, daß zwischen diesen ein Ausschnitt 80 verbleibt, welcher der Winkelausdehnung des ersten Raumsegments 32₁ entspricht, so daß durch diesen Ausschnitt 80 hindurch der kollimierte Pumpstrahlungsast 26 zu dem Parabolspiegel 50 geführt werden kann.

Vorzugsweise sind die beiden Umlenkeinheiten 60 und 70 so ausgebildet, daß sie eine zur jeweiligen Symmetrieebene 68 bzw. 78 symmetrische Form aufweisen, wobei im einfachsten Fall die Umlenkeinheit 60 aus einem Prisma 62 mit rechteckiger Grundfläche gebildet ist und die Umlenkeinheit 70 aus einem Prisma 72 mit mit symmetrisch zur Symmetrieebene 78 im Winkel verlaufenden Seitenkanten 82 und 84, wobei dieser Winkel zwischen den Seitenkanten 82 und 84 beim ersten Ausführungsbeispiel 135° beträgt.

Ferner bilden beide Umlenkeinheiten 60, 70 eine Ausnehmung 86, durch welche die zum Festkörper 10 führenden Äste 52 und 54 des Pumpstrahlungsfeldes hindurchtreten und welche auch den Festkörper 10 aufnehmen kann.

Bei der erfindungsgemäßen Lösung ist davon auszugehen, daß sich der kollimierte Pumpstrahlungsast 26 sowie die die übrigen einfallenden Äste 52₂ bis 52₄ bildenden kollimierten Teiläste 56_{1c} bis 56_{3c} sowie die aus den ausfallenden Ästen 54₁ bis 54₄ gebildeten kollimierten Teiläste 54₁ₐ bis 54₄ₐ nicht überlappen. Aus diesem Grund ist für jeden dieser kollimierten Äste 26, 54_{1c} bis 54_{3c} sowie 54₁ₐ bis 54₄ₐ jeweils ein eigenes Raumsegment 32₁ bis 32₈ vorzusehen, so daß die Zahl und Ausdehnung der Raumsegmente 32₁ bis 32₈ der Zahl und Ausdehnung der Segmente 50₁ bis 50₈ des Parabolspiegels 50, und auch der Zahl der vorstehend genannten kollimierten Teiläste entspricht, wobei sich die Raumsegmente 32 jeweils über denselben Winkelabstand um die Mittelachse 42 herum erstrecken, da sich auch eine Querschnittsfläche der kollimierten Äste 56 des Resonatorstrahlungsfelds 20 beim Durchlauf durch die Refokussierungsoptik 30 nicht ändert.

Verkleinert man den Winkel, über die sich die jeweiligen Raumsegmente 32 erstrecken, so ist, wie bei einem zweiten Ausführungsbeispiel in Fig. 13 dargestellt, die Zahl der Pumpdurchgänge durch den Festkörper 10 ebenfalls größer. In diesem Fall ist die zweite Umlenkeinheit 70' so ausgebildet und angeordnet, daß sie zwei kollimierte Äste umlenkt und die erste Umlenkeinheit 60' so angeordnet, daß sie zwei kollimierte Äste umlenkt und den letzten kollimierten Ast allerdings Seitenverkehrt in sich zurückreflektiert, da dieser sowohl hälftig auf die Reflexionsfläche 64 als auch auf die Reflexionsfläche 66 auftrifft.

In Fig. 13 ist nun einerseits die Zahl der Raumsegmente 32₁ bis 32₁₀ angegeben und außerdem ist in jedem Raumsegment 32 durch die Zahlen 1 bis 10 die Reihenfolge, in welcher diese durchlaufen werden, angegeben. Bei dem zweiten Ausführungsbeispiel wird somit der im achten Raumsegment 32₈ verlaufende fünfte kollimierte Ast 56₅ durch die Reflexionsflächen 64 und 66 in sich selbst zurückreflektiert.

Bei dem zweiten Ausführungsbeispiel besteht somit die Möglichkeit, 20 Pumpdurchgänge durch den Festkörper 10 zu erhalten, im Gegensatz zu 16 Pumpdurchgängen des ersten Ausführungsbeispiels.

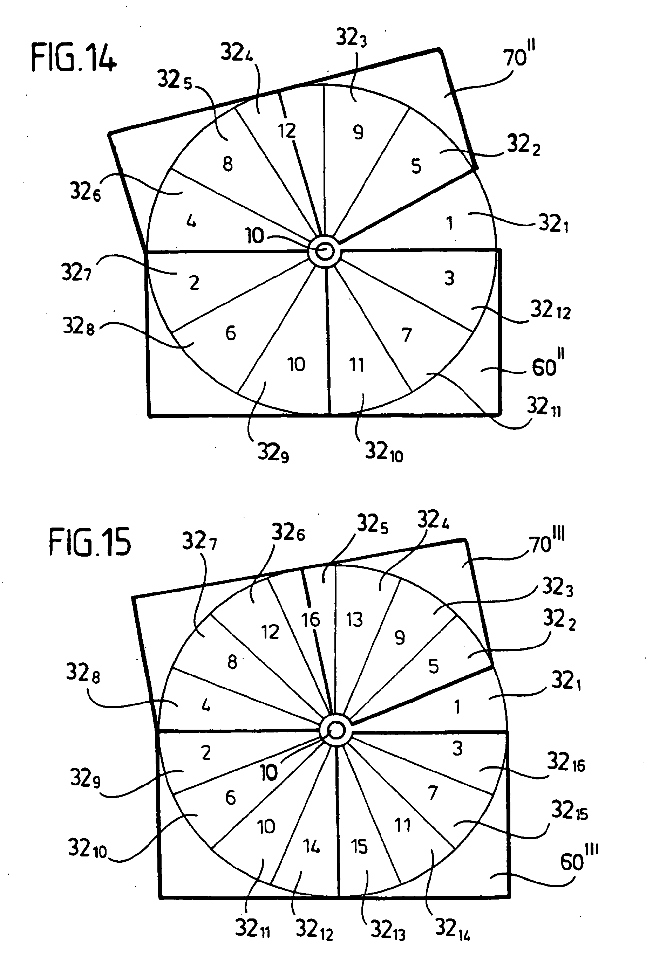

Bei einem dritten Ausführungsbeispiel, dargestellt in Fig. 14, ist die Zahl der Pumpdurchgänge weiter erhöht, wobei entsprechend die Zahl der Raumsegmente 32 ebenfalls vergrößert ist.

Bei dem dritten Ausführungsbeispiel ist die erste Umlenkeinheit 60" so ausgebildet, daß sie sich über insgesamt sechs Raumsegmente, nämlich die Raumsegmente 32₇ bis 32₁₂, erstreckt und insgesamt drei kollimierte Äste 56 umlenkt, während die zweite Umlenkeinheit 70" so ausgebildet ist, daß sie insgesamt zwei kollimierte Äste umlenkt und einen zusätzlich in sich selbst reflektiert.

Insbesondere ist bei dem dritten Ausführungsbeispiel zu erkennen, daß beim Durchlauf durch die Refokussierungsoptik 30 bei jeder der Umlenkeinheiten 60" und 70" der zuerst umgelenkte kollimierte Ast nämlich der sich vom Raumsegment 32₇ zum Raumsegment 32₁₂ erstreckende kollimierte Ast den größten Winkelabstand zwischen dem ersten Teilast 56₁ₐ und dem dritten Teilast 56_{1c} aufweist, während die später folgenden umgelenkten Teiläste, nämlich die sich zwischen dem Raumsegment 32₈ und 32₁₁ und die sich zwischen dem Raumsegment 32₉ und 32₁₀ erstreckenden kollimierten Äste 56 mit ihrem ersten Teilast und ihrem zweiten Teilast jeweils zwischen dem ersten und zweiten Teilast des von derselben Umlenkeinheit 60" vorher umgelenkten kollimierten Astes liegen.

Bei einem vierten Ausführungsbeispiel, dargestellt in Fig. 14 läßt sich durch weitere Erhöhung der Raumsegmente 32 auf insgesamt 16 die Zahl der Pumpdurchgänge auf 32 erhöhen, wobei in diesem Fall die erste Umlenkeinheit 60"' insgesamt vier kollimierte Äste umlenkt, während die zweite Umlenkeinheit 70"' drei kollimierte Äste umlenkt und einen in sich selbst, jedoch seitenverkehrt zurückreflektiert.

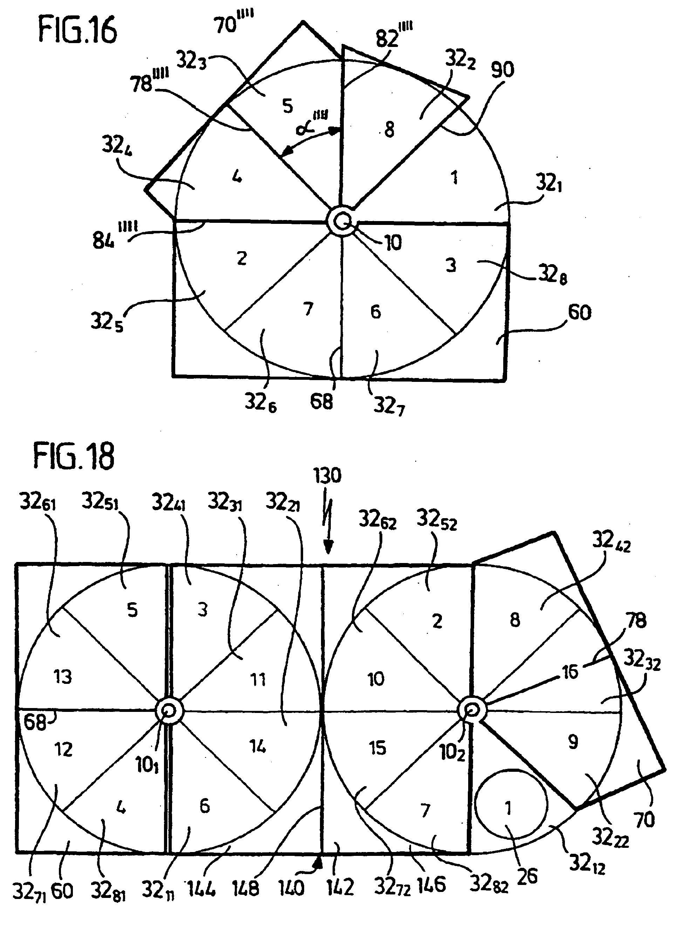

Bei einem fünften Ausführungsbeispiel, dargestellt in Fig. 16, sind, genau wie beim ersten Ausführungsbeispiel 16 Pumpdurchgänge vorgesehen, so daß auch beim Parabolspiegel 50 insgesamt 8 Raumsegmente 32 vorgesehen sind.

Im Gegensatz zum ersten Ausführungsbeispiel ist allerdings die zweite Umlenkeinheit 70"" so ausgebildet, daß sie sich lediglich über zwei Raumsegmente, nämlich die Raumsegmente 32₃ und 32₄ erstreckt, so daß die Seitenkanten 82"" und 84"" einen Winkel von 90° miteinander einschließen.

Die Umlenkeinheit 60 ist beim fünften Ausführungsbeispiel in gleicher Weise ausgebildet wie beim ersten Ausführungsbeispiel und erstreckt sich über vier Raumsegmente 32₅ bis 32₈.

Durch die Beschränkung der zweiten Umlenkeinheit 70"" auf die Raumsegmente 32₃ und 32₄ erstreckt sich der zweite kollimierte Ast 56₂ nicht mehr zwischen den Raumsegmenten 32₂ und 32₄, sondern zwischen den Raumsegmenten 32₃ und 32₄, da die Symmetrieebene 78"" mit der Symmetrieebene 68 einen Winkel α"" von 45° einschließt.

Damit liegt auch der vierte kollimierte Ast 56₄ im Raumsegment 32₂ und zur Rückreflexion desselben ist ein Endspiegel 90 dem Raumsegment 32₂ zugeordnet, welcher beispielsweise als Planspiegel ausgebildet ist und somit den vierten kollimierten Ast 56₄ in sich selbst, jedoch nicht seitenverkehrt zurückreflektiert.

Die anders geartete Form des Umlenkelements 70"" führt ferner dazu, daß der dritte kollimierte Ast nicht vom Raumsegment 32₆ zum Raumsegment 32₇ verläuft, wie im ersten Ausführungsbeispiel, sondern vom Raumsegment 32₇ zum Raumsegment 32₆.

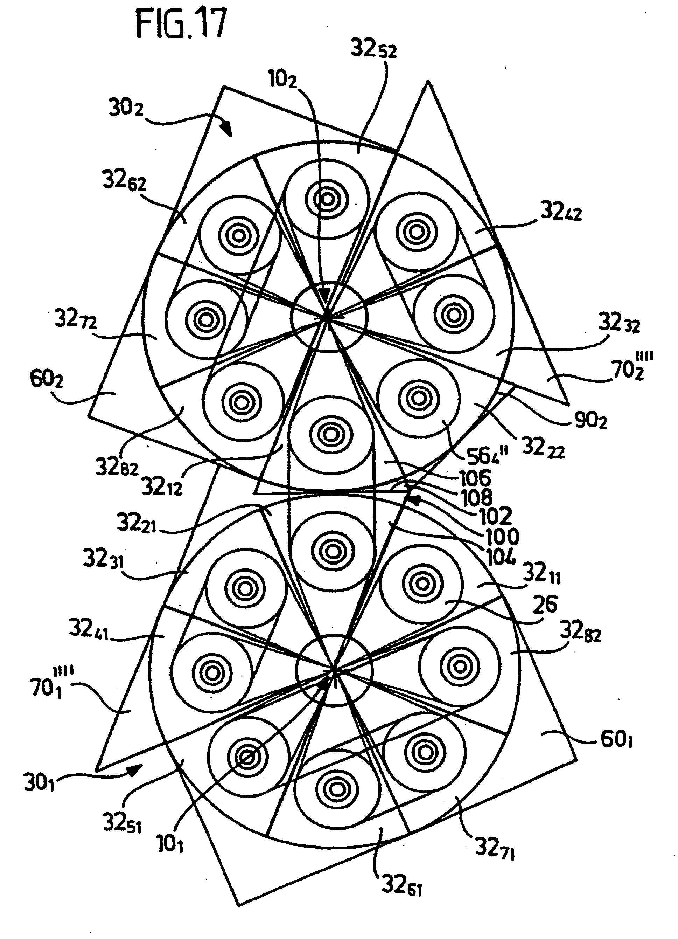

Das fünfte Ausführungsbeispiel gemäß Fig. 16 kann nun, wie bei einem sechsten Ausführungsbeispiel, dargestellt in Fig. 17 auch zum Pumpen zweier Festkörper 10₁ und 10₂ erweitert werden, wobei jedem der Festkörper 10 eine Fokussierungsteilsystem 30₁ und 30₂ zugeordnet ist, das jeweils zusätzlich zum Parabolspiegel 50 mit acht Segmenten die erste Umlenkeinheit 60 und die zweite Umlenkeinheit 70"" aufweist.

Im Gegensatz zum fünften Ausführungsbeispiel ist der Endspiegel 90 durch eine Umlenkeinheit 100 ersetzt, welche beispielsweise ein Umlenkprisma 102 mit einer ersten Reflexionsfläche 104 und einer zweiten Reflexionsfläche 106 umfaßt, die beide symmetrisch zu einer Symmetrieebene 108 angeordnet sind, die zwischen den Festkörpern 10 quer zu einer Verbindungsgeraden zwischen diesen verläuft.

Mit dieser Umlenkeinheit 100 besteht die Möglichkeit, den vierten kollimierten Ast 56₄ von dem ersten Fokussierungsteilsystem 30₁ in das zweite Fokussierungsteilsystem 30₂ zu überführen und dort wie den kollimierten Pumpstrahlungsast 26 auf im ersten Raumsegment 32₁₁ verlaufen zu lassen, wobei sich in gleicher Weise wie bereits im Zusammenhang mit dem fünften Ausführungsbeispiel und dem ersten Ausführungsbeispiel beschrieben, die nachfolgenden einfallenden, ausfallenden und kollimierten Äste bilden und letztlich der letzte kollimierte Ast 56₄" auf einen Endspiegel 90₂ im Raumsegment 32₂₂ trifft, welcher dem Endspiegel 90 des fünften Ausführungsbeispiels entspricht und welcher das beide Fokussierungsteilsysteme 30₁ und 30₂ einmal durchlaufende Pumpstrahlungsfeld 20 wieder zurück in umgekehrter Weise laufen läßt.

Damit erhält man beim sechsten Ausführungsbeispiel in jedem der beiden Festkörper 10₁ und 10₂ insgesamt 16 Pumpdurchgänge.

Alternativ zum Vorsehen des Umlenkprismas 102 ist es denkbar, in der Umlenkeinheit eine umlenkende und zwischenfokussierende Optik vorzusehen, so daß der optische Weg zwischen den Fokussierungsteilsystemen 30₁ und 30₂ beliebig gewählt werden kann.

Ein siebtes Ausführungsbeispiel eines erfindungsgemäßen Laserverstärkersystems, dargestellt in Fig. 18 erfolgt ebenfalls das Pumpen zweier Festkörper 10₁ und 10₂ über ein Fokussierungssystem 130, welches wie beim ersten Ausführungsbeispiel die Umlenkeinheiten 60 und 70 aufweist, wobei die Umlenkeinheit 60 dem ersten Festkörper 10₁ zugeordnet ist und die Umlenkeinheit 70 dem zweiten Festkörper 10₂ und zwischen diesen Umlenkeinheiten 70 eine als Ganzes mit 140 bezeichnete Umlenkeinheit 140 vorgesehen ist, welche ein Prisma 142 mit zwei Reflexionsflächen 144 und 146 umfaßt, die symmetrisch zu einer Symmetrieebene 148 angeordnet sind, wobei die Symmetrieebene 148 sich zwischen den Festkörpern 10 und quer zu einer Verbindungsgeraden zwischen diesen erstrecken.

Die Reflexionsfläche 144 ist dabei den Raumsegmenten 32₁₁ bis 32₄₁ zugeordnet und dient dazu, die Raumsegmente 32₁₁ bis 32₄₁ mit den Raumsegmenten 32₅₂ bis 32₈₂ miteinander zu koppeln, wobei jeweils eine Reflexion symmetrisch zur Symmetrieebene 148 erfolgt, die senkrecht auf zur Symmetrieebene 68 verläuft.

Vorzugsweise koppelt die Umlenkeinheit 140 die Raumsegmente 32₅₂ und 32₄₁ sowie 32₃₁ und 32₆₂, 32₂₁ und 32₇₂ sowie 32₈₂ und 32₁₁.

Ein im Raumsegment 32₁₂ zugeführter kollimierter Pumpast 26 wird somit über einen einfallenden und ausfallenden Ast in das Raumsegment 32₅₂ überführt, dort von der als kollimierter Ast von der Umlenkeinheit 140 in das Raumsegment 32₄₁ vom Raumsegment 32₄₁ über einen einfallenden und ausfallenden Ast in das Raumsegment 32₈₁, vom Raumsegment 32₈₁ über die Umlenkeinheit 60 umgelenkt in das Raumsegment 32₅₁, vom Raumsegment 32₅₁ über einen einfallenden und ausfallenden Ast in das Raumsegment 32₁₁, vom Raumsegment 32₁₁ in das Raumsegment 32₈₂, vom Raumsegment 32₈₂ über einen einfallenden und ausfallenden Ast in das Raumsegment 32₄₂, vom Raumsegment 32₄₂ umgelenkt durch die Umlenkeinheit 70 in das Raumsegment 32₂₂, vom Raumsegment 32₂₂ über einen einfallenden und ausfallenden Ast umgelenkt in das Raumsegment 32₆₂, vom Raumsegment 32₆₂ in das Raumsegment 32₃₁ durch die Umlenkeinheit 140 abgebildet, vom Raumsegment 32₃₁ über einen einfallenden und ausfallenden Ast in das Raumsegment 32₇₁, vom Raumsegment 32₇₁ durch die Umlenkeinheit 60 umgelenkt in das Raumsegment 32₆₁, vom Raumsegment 32₆₁ über einen einfallenden und ausfallenden Ast umgelenkt in das Raumsegment 32₂₁, vom Raumsegment 32₂₁ umgelenkt mit der Umlenkeinheit 140 in das Raumsegment 32₇₂ und vom Raumsegment 32₇₂ über einen einfallenden und ausfallenden Ast in das Raumsegment 32₃₂ und dort durch die Umlenkeinheit 70 in gleicher Weise wie beim ersten Ausführungsbeispiel seitenverkehrt in sich zurückreflektiert, so daß das Pumpstrahlungsfeld 20 nach dem ersten Durchgang erneut mit einem zweiten Durchgang das Fokussierungssystem 130 durchläuft und somit jeweils in jedem der Festkörper 10₁ und 10₂ sechzehn Pumpdurchgänge erzeugt.

## Patentansprüche

1. Laserverstärkersystem umfassend einen ein laseraktives Medium aufweisenden Festkörper (10), eine Pumpstrahlungsquelle zur Erzeugung eines Pumpstrahlungsfeldes, welches den Festkörper (10) mehrfach durchsetzt, und ein Fokussierungssystem, welches mehrere verschiedene in den Festkörper einfallende Äste des Pumpstrahlungsfeldes erzeugt und dabei mindestens einen aus dem Festkörper (10) ausfallenden Ast in einen der in den Festkörper einfallenden und vom ausfallenden Ast verschiedenen Äste umsetzt,
**dadurch gekennzeichnet,**
**daß** das Fokussierungssystem (30) mindestens eine Umlenkeinheit (60) umfaßt, welche durch Strahlungsfeldumlenkung relativ zu einer einzigen Symmetrieebene (68) mindestens zwei aus mindestens zwei verschiedenen aus dem Festkörper (10) ausfallenden Ästen (54₁, 54₃) des Pumpstrahlungsfeldes (20) gebildete erste Teiläste (56₁ₐ, 56₃ₐ) in mindestens zwei entsprechende, lokal von den ersten Teilästen (56₁ₐ, 56₃ₐ) getrennt verlaufende zweite Teiläste (56_{1c}, 56_{3c}) umsetzt, aus welchen mindestens zwei der in den Festkörper (10) einfallenden Äste (52₂, 52₄) entstehen.

2. Laserverstärkersystem nach dem Oberbegriff des Anspruchs 1, **dadurch gekennzeichnet, daß** das Fokussierungssystem (30) zwei Umlenkeinheiten (60,70) umfaßt, daß jede der Umlenkeinheiten (60, 70) mindestens einen aus einem
ausfallenden Ast (54) gebildeten ersten Teilast (56₁ₐ, 56₂ₐ, 56₃ₐ) in einen von diesem lokal verschieden verlaufenden zweiten Teilast (56_{1c}, 56_{2c}, 56_{3c}) umsetzt und daß jede der Umlenkeinheiten (60,70) einen zweiten Teilast (56_{1c}, 56_{2c}) erzeugt, aus welchem einer der einfallenden Äste (52₂, 52₃) entsteht, der seinerseits wieder zu einem ausfallenden Ast (54₂, 54₃) führt, aus welchem ein auf die andere Umlenkeinheiten (60, 70) auftreffender erster Teilast (56₂ₐ, 56₃ₐ) entsteht.

3. Laserverstärkersystem nach dem Oberbegriff des Anspruchs 1 oder nach einem der voranstehenden Ansprüche, **dadurch gekennzeichnet, daß** das Fokussierungssystem (30) eine erste Umlenkeinheit (60) und eine zweite Umlenkeinheit (70) umfaßt und daß die beiden Umlenkeinheiten (60, 70), jeweils durch Strahlungsfeldumlenkung relativ zu einer einzigen Symmetrieebene (68, 78), insgesamt mindestens drei aus mindestens drei verschiedenen ausfallenden Ästen (54₁, 54₂, 54₃) des Pumpstrahlungsfeldes (20) gebildete erste Teiläste (56₁ₐ, 56₂ₐ, 56₃ₐ) in mindestens drei entsprechende, lokal von den ersten Teilästen (56₁ₐ, 56₂ₐ, 56₃ₐ) getrennt verlaufende zweite Teiläste (56_{1c}, 56_{2c}, 56_{3c}) umsetzen, aus welchen mindestens drei einfallende Äste (52₂, 52₃, 52₄) entstehen.

4. Laserverstärkersystem nach dem Oberbegriff des Anspruchs 1 oder nach einem der voranstehenden Ansprüche, **dadurch gekennzeichnet, daß** das Fokussierungssystem (30) mindestens eine Umlenkeinheit (60) aufweist, und daß die Umlenkeinheit (60) aus einem der ersten Teiläste (56₁ₐ) einen bezüglich einer Mittelachse (42) des Fokussierungssystems (30) um einen derartigen Winkelabstand versetzt liegenden zweiten Teilast (56_{1c}) formt, daß im Winkelbereich zwischen diesem ersten Teilast (56₁ₐ) und diesem daraus gebildeten zweiten Teilast (56_{1c}) mindestens ein weiterer erster Teilast (56₃ₐ) liegt.

5. Laserverstärkersystem nach dem Oberbegriff des Anspruchs 1 oder nach einem der voranstehenden Ansprüche, **dadurch gekennzeichnet, daß** das Fokussierungssystem (30) eine erste Umlenkeinheit (60), welche das Pumpstrahlungsfeld (20) relativ zu einer ersten Symmetrieebene (68) umlenkt, und eine zweite Umlenkeinheit (70), welche das Pumpstrahlungsfeld (20) relativ zu einer zweiten Symmetrieebene (78) umlenkt, aufweist, und daß die Symmetrieebenen (68, 78) einen Winkel miteinander einschließen, der 180° oder 360° geteilt durch die Summe der bei einem Durchlauf des Pumpstrahlungsfeldes (20) durch das Fokussierungssystem (30) und den Festkörper (10) auftretenden einfallenden und ausfallenden Äste (52, 54) entspricht.

6. Laserverstärkersystem nach einem der voranstehenden Ansprüche, **dadurch gekennzeichnet, daß** die Symmetrieebene (68, 78) parallel zu der Mittelachse (42) verläuft.

7. Laserverstärkersystem nach Anspruch 6, **dadurch gekennzeichnet, daß** die Symmetrieebenen (68, 78) durch die Mittelachse (42) hindurch verlaufen.

8. Laserverstärkersystem nach einem der voranstehenden Ansprüche, **dadurch gekennzeichnet, daß** die ersten Teiläste (56₁ₐ, 56_{2a,} 56₃ₐ, 56₄ₐ) im Pumpstrahlungsfeld (20) getrennt voneinander verlaufen.

9. Laserverstärkersystem nach Anspruch 8, **dadurch gekennzeichnet, daß** die ersten Teiläste (56₁ₐ, 56₂ₐ, 56₃ₐ, 56₄ₐ) relativ zueinander in Winkelabständen um eine Mittelachse (42) des Fokussierungssystems (30) herum angeordnet sind.

10. Laserverstärkersystem nach einem der voranstehenden Ansprüche, **dadurch gekennzeichnet, daß** die zweiten Teiläste (56_{1c}, 56_{2c}, 56_{3c}) getrennt voneinander verlaufen.

11. Laserverstärkersystem nach einem der Ansprüche 8 bis 10, **dadurch gekennzeichnet, daß** die zweiten Teiläste (56_{1c}, 56_{2c}, 56_{3c}) getrennt von den ersten Teilästen (56₁ₐ, 56₂ₐ, 56₃ₐ, 56₄ₐ) verlaufen.

12. Laserverstärkersystem nach Anspruch 10 oder 11, **dadurch gekennzeichnet, daß** die zweiten Teiläste (56_{1c}, 56_{2c}, 56_{3c}) relativ zueinander und relativ zu den ersten Teilästen (56₁ₐ, 56₂ₐ, 56₃ₐ, 56₄ₐ) in Winkelabständen um die Mittelachse (42) des Fokussierungssystems (30) angeordnet sind.

13. Laserverstärkersystem nach einem der Ansprüche 3 bis 12, **dadurch gekennzeichnet, daß** die mindestens drei ersten Teiläste (56₁ₐ, 56₂ₐ, 56₃ₐ) und die mindestens drei zweiten Teiläste (56_{1c}, 56_{2c}, 56_{3c}) bei einem Durchlauf des Pumpstrahlungsfeldes (20) durch das Fokussierungssystem (30) und den Festkörper (10) auftreten.

14. Laserverstärkersystem nach einem der voranstehenden Ansprüche, **dadurch gekennzeichnet, daß** die bei einem Durchlauf des Pumpstrahlungsfeldes (20) durch das Fokussierungssystem (30) entstehenden ersten und zweiten Teiläste (56₁ₐ, 56₂ₐ, 56₃ₐ, 56₄ₐ, 56_{1c}, 56_{2c}, 56_{3c}) überlappungsfrei im Raum um die Mittelachse (42) des Fokussierungssystems (30) herum angeordnet sind.

15. Laserverstärkersystem nach Anspruch 13, **dadurch gekennzeichnet, daß** die ersten und zweiten Teiläste (56₁ₐ, 56₂ₐ, 56₃ₐ, 56₄ₐ, 56_{1c}, 56_{2c}, 56_{3c}) und der Pumpstrahlungsast (26) eines Durchlaufs überlappungsfrei im Raum um die Mittelachse (42) des Fokussierungssystems (30) herum angeordnet sind.

16. Laserverstärkersystem nach einem der voranstehenden Ansprüche, **dadurch gekennzeichnet, daß** die ersten und zweiten Teiläste (56₁ₐ, 56₂ₐ, 56₃ₐ, 56₄ₐ, 56_{1c}, 56_{2c}, 56_{3c}) jeweils im Raumsegmenten (32) um die Mittelachse (42) des Fokussierungssystems (30) herum angeordnet sind und sich innerhalb der Raumsegmente (32) quer zu ihrer Ausbreitungsrichtung ausdehnen.

17. Laserverstärkersystem nach Anspruch 15, **dadurch gekennzeichnet, daß** jedes der Raumsegmente (32) sich ungefähr über denselben Winkelbereich um die Mittelachse (42) erstreckt.

18. Laserverstärkersystem nach Anspruch 16, **dadurch gekennzeichnet, daß** die Raumsegmente (32) der ersten und zweiten Teiläste (56₁ₐ, 56₂ₐ, 56₃ₐ, 56₄ₐ, 56_{1c}, 56_{2c}, 56_{3c}) sowie das Raumsegment (32) des Pumpstrahlungsastes (26) im wesentlichen die Mittelachse (42) umschließen.

19. Laserverstärkersystem nach einem der voranstehenden Ansprüche, **dadurch gekennzeichnet, daß** das Fokussierungssystem (30) einen aus dem Festkörper (10) ausfallenden Ast (54) in einen zwischenkollimierten Ast (56) umformt und den zwischenkollimierten Ast (56) wiederum in einen erneut in den Festkörper (10) einfallenden und auf diesen fokussierten Ast (52) umformt.

20. Laserverstärkersystem nach Anspruch 19, **dadurch gekennzeichnet, daß** die zwischenkollimierten Äste (56) die ersten und zweiten Teiläste (56₁ₐ, 56₂ₐ, 56₃ₐ, 56₄ₐ, 56_{1c}, 56_{2c}, 56_{3c}) bilden.

21. Laserverstärkersystem nach Anspruch 19 oder 20, **dadurch gekennzeichnet, daß** das Fokussierungssystem (30) kollimierende und fokussierende Elemente (50₁ bis 50ₙ) aufweist, welche die ausfallenden Äste (54) in zwischenkollimierte Äste (56) bzw. die zwischenkollimierten Äste (56) in einfallende Äste (52) umformen.

22. Laserverstärkersystem nach Anspruch 20 oder 21, **dadurch gekennzeichnet, daß** die Umlenkeinheiten (60, 70) die zwischenkollimierten Äste (56) umlenken.

23. Laserverstärkersystem nach einem der voranstehenden Ansprüche, **dadurch gekennzeichnet, daß** ein nach einem Durchlauf durch das Fokussierungssystem (30) gebildeter kollimierter erster Teilast (56₄ₐ) in einen zweiten mit dem ersten Teilast (56₄ₐ) im wesentlichen deckungsgleichen Teilast (56_{4c}) umgesetzt wird.

24. Laserverstärkersystem nach Anspruch 23, **dadurch gekennzeichnet, daß** der mit dem ersten Teilast (56₄ₐ) im wesentlichen deckungsgleiche zweite Teilast (56_{4c}) durch Rückreflexion (90) an einer ebenen Reflexionsfläche entsteht.

25. Laserverstärkersystem nach Anspruch 23, **dadurch gekennzeichnet, daß** der mit dem ersten Teilast (56₄ₐ) im wesentlichen deckungsgleiche zweite Teilast (56_{4c}) durch Reflexion an einem symmetrieerhaltenden umlenkenden Reflexionssystem (60, 70) erfolgt.

26. Laserverstärkersystem nach einem der voranstehenden Ansprüche, **dadurch gekennzeichnet, daß** das Fokussierungssystem (30) maximal zwei dem Festkörper (10) zugeordnete Umlenkeinheiten (60, 70) aufweist, welche einen aus einem aus diesem Festkörper (10) ausfallenden Ast (54) gebildeten ersten Teilast (56₁ₐ, 56₂ₐ, 56₃ₐ) in einen zweiten einen der in diesen Festkörper einfallenden Äste bildenden Teilast (56_{1c}, 56_{2c}, 56_{3c}) umsetzen.

27. Laserverstärkersystem nach einem der voranstehenden Ansprüche, **dadurch gekennzeichnet, daß** dieses mindestens zwei Festkörper (10₁, 10₂) umfaßt und daß mindestens eine dritte Umlenkeinheit (100, 140) vorgesehen ist, welche einen Ast (56) des Pumpstrahlungsfeldes (20) quer zu einer sich zwischen den Festkörpern (10₁, 10₂) erstreckenden weiteren Symmetrieebene (108, 148) umlenkt.

28. Laserverstärkersystem nach einem der voranstehenden Ansprüche, **dadurch gekennzeichnet, daß** die Umlenkeinheit (60, 70, 100, 140) zwei in einem Winkel zueinander verlaufende Reflexionsflächen (64, 66; 74, 76; 104, 106; 144, 146) umfaßt.

29. Laserverstärkersystem nach Anspruch 28, **dadurch gekennzeichnet, daß** die Reflexionsflächen (64, 66; 74, 76; 104, 106; 144, 146) an einer Reflektoreinheit (62, 72, 102, 142) angeordnet sind.

30. Laserverstärkersystem nach Anspruch 29, **dadurch gekennzeichnet, daß** die Reflektoreinheit ein Prisma (62, 72, 102, 142) ist.

31. Laserverstärkersystem nach einem der voranstehenden Ansprüche, **dadurch gekennzeichnet, daß** die Umlenkeinheiten (60, 70, 100, 140) eine Ausnehmung (86) bilden, durch welche die in den Festkörper (10) einfallenden oder aus diesem ausfallenden Äste (52, 54) hindurchtreten.

32. Laserverstärkersystem nach einem der voranstehenden Ansprüche, **dadurch gekennzeichnet, daß** die Umlenkeinheiten (60, 70, 100, 140) eine Ausnehmung (80) bilden, durch welche ein Pumpstrahlungsast (26) in das Fokussierungssystem (30) eintritt.

## Claims

1. A laser amplifier system comprising a solid body (10) having a laser-active medium, a pump radiation source (22) for producing a pump radiation field (20) which passes a number of times through the solid body (10), and a focusing system which produces a plurality of different branches of the pump radiation field that enter the solid body, and in so doing converts at least one branch that emerges from the solid body (10) into one of the branches that enter the solid body and are different from the emerging branch, **characterized in that** the focusing system (30) comprises at least one deviating unit (60) which, by radiation field deviation relative to a single symmetry plane (68), converts at least two first sub-branches (56₁ₐ, 56₃ₐ), formed from at least two different branches (54₁, 54₃) of the pump radiation field (20) that emerge from the solid body (10), into at least two corresponding second sub-branches (56_{1c}, 56_{3c}) with trajectories locally separate from the first sub-branches (56₁ₐ, 56₃ₐ), from which at least two branches (52₂, 52₄) that enter the solid body (10) are obtained.

2. A laser amplifier system according to the preamble of Claim 1 or according to any of the preceding claims, **characterized in that** the focusing system (30) comprises two deviating units (60, 70), **in that** each of the deviating units (60, 70) converts at least one first sub-branch (56₁ₐ, 56₂ₐ, 56₃ₐ), formed from an emerging branch (54), into a second sub-branch (56_{1c}, 56_{2c}, 56_{3c}) with a trajectory locally different from the first sub-branch (56₁ₐ, 56₂ₐ, 56₃ₐ), and **in that** each of the deviating units (60, 70) produces a second sub-branch (56_{1c}, 56_{2c}), from which one of the incident branches (52₂, 52₃) is obtained which, for its part, in turn leads to an emerging branch (54₂, 54₃) from which a first sub-branch (56₂ₐ, 56₃ₐ) that strikes the other deviating units (60, 70) is obtained.

3. A laser amplifier system according to the preamble of Claim 1 or according to any of the preceding claims, **characterized in that** the focusing system (30) comprises a first deviating unit (60) and a second deviating unit (70), and **in that** the two deviating units (60, 70), respectively by radiation field deviation relative to a single symmetry plane (68, 78), convert overall at least three first sub-branches (56₁ₐ, 56₂ₐ, 56₃ₐ), formed from at least three different emerging branches (54₁, 54₂, 54₃) of the pump radiation field (20), into at least three corresponding second sub-branches (56_{1c}. 56_{2c}, 56_{3c}) with trajectories locally separate from the first sub-branches (56₁ₐ, 56₂ₐ, 56₃ₐ), from which at least three incident branches (52₂, 52₃, 52₄) are obtained.

4. A laser amplifier system according to the preamble of Claim 1 or according to any of the preceding claims, **characterized in that** the focusing system (30) has at least one deviating unit (60), and **in that** the deviating unit (60) forms, from one of the first sub-branches (56₁ₐ), a second sub-branch (56_{1c}) which is offset in relation to a central axis (42) of the focusing system (30) by an angular spacing such that at least one further first sub-branch (56₃ₐ) lies in the angular region between this first sub-branch (56₁ₐ) and the second sub-branch (56_{1c}) formed from the first sub-branch (56₁ₐ).

5. A laser amplifier system according to the preamble of Claim 1 or according to any of the preceding claims, **characterized in that** the focusing system (30) has a first deviating unit (60), which deviates the pump radiation field (20) relative to a first symmetry plane (68), and has a second deviating unit (70), which deviates the pump radiation field (20) relative to a second symmetry plane (78), and **in that** the symmetry planes (68, 78) meet at an angle which corresponds to 180° or 360° divided by the sum of the incident and emerging branches (52, 54) arising during a pass of the pump radiation field (20) through the focusing system (30) and the solid body (10).

6. A laser amplifier system according to any of the preceding claims, **characterized in that** the symmetry plane (68, 78) runs parallel to the central axis (42).

7. A laser amplifier system according to Claim 6, **characterized in that** the symmetry planes (68, 78) run through the central axis (42).

8. A laser amplifier system according to any of the preceding claims, **characterized in that** the first sub-branches (56₁ₐ, 56₂ₐ, 56₃ₐ, 56₄ₐ) have separate trajectories from one another in the pump radiation field (20).

9. A laser amplifier system according to Claim 8, **characterized in that** the first sub-branches (56₁ₐ, 56₂ₐ, 56₃ₐ, 56₄ₐ) are arranged relative to one another at angular spacings around a central axis (42) of the focusing system (30).

10. A laser amplifier system according to any of the preceding claims, **characterized in that** the second sub-branches (56_{1c}, 56_{2c}, 56_{3c}) have separate trajectories from one another.

11. A laser amplifier system according to any of Claims 8 to 10, **characterized in that** the second sub-branches (56_{1c}, 56_{2c}, 56_{3c}) have separate trajectories from the first sub-branches (56₁ₐ, 56₂ₐ, 56₃ₐ, 56₄ₐ).

12. A laser amplifier system according to Claim 10 or Claim 11, **characterized in that** the second subbranches (56_{1c}, 56_{2c}, 56_{3c}) are arranged relative to one another, and relative to the first sub-branches (56₁ₐ, 56₂ₐ, 56₃ₐ, 56₄ₐ), at angular spacings around the central axis (42) of the focusing system (30).

13. A laser amplifier system according to any of Claims 3 to 12, **characterized in that** the at least three first sub-branches (56₁ₐ, 56₂ₐ, 56₃ₐ) and the at least three second sub-branches (56_{1c}, 56_{2c}, 56_{3c}) arise during a pass of the pump radiation field (20) through the focusing system (30) and the solid body (10).

14. A laser amplifier system according to any of the preceding claims, **characterized in that** the first and second sub-branches (56₁ₐ, 56₂ₐ, 56₃ₐ, 56₄ₐ, 56_{1c}, 56_{2c}, 56_{3c}) arising during a pass of the pump radiation field (20) through the focusing system (30) are arranged without overlap in the space around the central axis (42) of the focusing system (30).

15. A laser amplifier system according to Claim 13, **characterized in that** the first and second sub-branches (56₁ₐ, 56₂ₐ, 56₃ₐ, 56₄ₐ, 56_{1c}, 56_{2c}, 56_{3c}) and the pump radiation branch (26) of a pass are arranged without overlap in the space around the central axis (42) of the focusing system (30).

16. A laser amplifier system according to any of the preceding claims, **characterized in that** the first and second sub-branches (56₁ₐ, 56₂ₐ, 56₃ₐ, 56₄ₐ, 56_{1c}, 56_{2c}, 56_{3c}) are respectively arranged in space segments (32) around the central axis (42) of the focusing system (30), and expand transversely within the space segments (32) with respect to their propagation direction.

17. A laser amplifier system according to Claim 15, **characterized in that** each of the space segments (32) extends over approximately the same angular region around the central axis (42).

18. A laser amplifier system according to Claim 16, **characterized in that** the space segments (32) of the first and second sub-branches (56₁ₐ, 56₂ₐ, 56₃ₐ, 56₄ₐ, 56_{1c}, 56_{2c}, 56_{3c}), as well as the space segment (32) of the pump radiation branch (26), substantially surround the central axis (42).

19. A laser amplifier system according to any of the preceding claims, **characterized in that** the focusing system (30) converts a branch (54) that emerges from the solid body (10) into an intermediately-collimated branch (56), and converts the intermediately-collimated branch (56) in turn into a branch (52) that again enters the solid body (10) and is focused onto the solid body.

20. A laser amplifier system according to Claim 19, **characterized in that** the intermediately-collimated branches (56) form the first and second sub-branches (56₁ₐ, 56₂ₐ, 56₃ₐ, 56₄ₐ, 56_{1c}, 56_{2c}, 56_{3c}).

21. A laser amplifier system according to Claim 19 or Claim 20, **characterized in that** the focusing system (30) has collimating and focusing elements (50₁ to 50ₙ) which convert the emerging branches (54) into intermediately-collimated branches (56) and the intermediately-collimated branches (56) into incident branches (52), respectively.

22. A laser amplifier system according to Claim 20 or Claim 21, **characterized in that** the deviating units (60, 70) deviate the intermediately-collimated branches (56).

23. A laser amplifier system according to any of the preceding claims, **characterized in that** a collimated first sub-branch (56₄ₐ) formed after a pass through the focusing system (30) is converted into a second sub-branch (56_{4c}) that is Substantially congruent with the first sub-branch (56₄ₐ).

24. A laser amplifier system according to Claim 23, **characterized in that** the second sub-branch (56_{4c}) that is substantially congruent with the first sub-branch (56₄ₐ) is obtained by back-reflection (90) at a plane reflection surface.

25. A laser amplifier system according to Claim 23, **characterized in that** the second sub-branch (56_{4c}) that is substantially congruent with the first sub-branch (56₄ₐ) occurs by reflection at a symmetry-preserving deflecting reflection system (60, 70).

26. A laser amplifier system according to any of the preceding claims, **characterized in that** the focusing system (30) has at most two deviating units (60, 70) allocated to the solid body (10), which convert a first sub-branch (56₁ₐ, 56₂ₐ, 56₃ₐ), formed from a branch (54) that emerges from the solid body (10), into a second sub-branch (56_{1c}, 56_{2c}, 56_{3c}) which forms one of the branches that enter this solid body.

27. A laser amplifier system according to any of the preceding claims, **characterize in that** it comprises at least two solid bodies (10₁, 10₂), and in that at least a third deviating unit (100, 140) is provided which deviates a branch (56) of the pump radiation field (20) transversely with respect to a further symmetry plane (108, 148) extending between the solid bodies (10₁, 10₂).

28. A laser amplifier system according to any of the preceding claims, **characterized in that** the deviating unit (60, 70, 100, 140) comprises two reflection faces (64, 66; 74, 76; 104, 106; 144, 146) running at an angle to one another.

29. A laser amplifier system according to Claim 28, **characterized in that** the reflection faces (64, 66; 74, 76; 104, 106; 144, 146) are arranged on a reflector unit (62, 72, 102, 142).

30. A laser amplifier system according to Claim 29, **characterized in that** the reflector unit is a prism (62, 72, 102, 142).

31. A laser amplifier system according to any of the preceding claims, **characterized in that** the deviating units (60, 70, 100, 140) define a recess (86) through which the branches (52, 54) that enter or emerge from the solid body (10) pass.

32. A laser amplifier system according to any of the preceding claims, **characterized in that** the deviating units (60, 70, 100, 140) define a recess (80) through which a pump radiation branch (26) enters the focusing system (30).

## Revendications

1. Système d'amplification de laser comprenant un corps solide (10) présentant un milieu actif laser, une source de rayonnement de pompage (22) pour générer un champ de rayonnement de pompage (20) qui traverse plusieurs fois le corps solide (10) et un système de concentration qui génère plusieurs branches différentes entrant dans le corps solide du champ de rayonnement de pompage et convertit au moins une branche sortant du corps solide (10) en une des branches entrant dans le corps solide et différentes de la branche sortante,
**caractérisé en ce**
**que** le système de concentration (30) comprend au moins une unité de renvoi (60) qui convertit par un renvoi du champ de rayonnement par rapport à un seul plan de symétrie (68) au moins deux premières branches partielles (56₁ₐ, 56₃ₐ) formées par au moins deux branches (54₁, 54₃) différentes sortant du corps solide (10) du champ de rayonnement de pompage (20) en au moins deux deuxièmes branches partielles (56_{1c}, 56_{3c}) correspondantes, s'étendant localement séparément des premières branches partielles (56₁ₐ, 56₃ₐ), desquelles proviennent au moins deux des branches (52₂, 52₄) entrant dans le corps solide (10).

2. Système d'amplification de laser selon le préambule de la revendication 1 ou selon l'une quelconque des revendications précédentes, **caractérisé en ce que** le système de concentration (30) comprend deux unités de renvoi (60, 70), **en ce que** chacune des unités de renvoi (60, 70) convertit au moins une première branche partielle (56ₐ₁, 56₂ₐ, 56₃ₐ) formée par une branche sortante (54) en une deuxième branche partielle (56_{1c}, 56_{2c}, 56_{3c}) s'étendant différemment localement de celle-ci et **en ce que** chacune des unités de renvoi (60, 70) génère une deuxième branche partielle (56_{1c}, 56_{2c}), de laquelle provient l'une des branches (52₂, 52₃) entrantes qui mène de son côté de nouveau à une branche (54₂, 54₃) sortante, de laquelle provient une première branche partielle (56₂ₐ, 56₃ₐ) touchant l'autre unité de renvoi (60, 70).

3. Système d'amplification de laser selon le préambule de la revendication 1 ou selon l'une quelconque des revendications précédentes, **caractérisé en ce que** le système de concentration (30) comprend une première branches de renvoi (60) et une seconde unité de renvoi (70) et **en ce que** les deux unités de renvoi (60, 70) convertissent respectivement par renvoi du champ de rayonnement par rapport à un seul plan de symétrie (68, 78), dans l'ensemble au moins trois premières branches partielles (56₁ₐ, 56₂ₐ, 56₃ₐ) formées par au moins trois différentes branches (54₁, 54₂, 54₃) sortantes du champ de rayonnement de pompage (20) en au moins trois deuxièmes branches partielles (56_{1c}, 56_{2c}, 56_{3c}) correspondantes, s'étendant localement séparément des premières charges partielles (56₁ₐ, 56₂ₐ, 56₃ₐ), desquelles proviennent au moins trois branches (52₂, 52₃, 52₄) entrantes.

4. Système d'amplification de laser selon le préambule de la revendication 1 ou selon l'une quelconque des revendications précédentes, **caractérisé en ce que** le système de concentration (30) présente au moins une unité de renvoi (60), et **en ce que** l'unité de renvoi (60) forme à partir d'une des premières branches partielles (56₁ₐ) une deuxième branche partielle (56_{1c}) décalée par rapport à un axe médian (42) du système de concentration (30) d'une distance angulaire telle qu'au moins une autre première branche partielle (56₃ₐ) se trouve dans la zone angulaire entre cette première branche partielle (56₁ₐ) et cette deuxième branche partielle (56_{1c}) formée de celle-ci.

5. Système d'amplification de laser selon le préambule de la revendication 1 ou selon l'une quelconque des revendications précédentes, **caractérisé en ce que** le système de concentration (30) présente une première unité de renvoi (60) qui renvoie le champ de rayonnement de pompage (20) par rapport à un premier plan de symétrie (68), et une seconde unité de renvoi (70) qui renvoie le champ de rayonnement de pompage (20) par rapport à un second plan de symétrie (78), et **en ce que** les plans de symétrie (68, 78) incluent un angle entre eux qui correspond à 180° ou 360° divisé par la somme des branches (52, 54) entrantes et sortantes survenant lors d'un passage du champ de rayonnement de pompage (20) par le système de concentration (30) et le corps solide (10).

6. Système d'amplification de laser selon l'une quelconque des revendications précédentes, **caractérisé en ce que** le plan de symétrie (68, 78) s'étend parallèlement à l'axe médian (42).

7. Système d'amplification de laser selon la revendication 6, **caractérisé en ce que** les plans de symétries (68, 78) s'étendent au travers de l'axe médian (42).

8. Système d'amplification de laser selon l'une quelconque des revendications précédentes, **caractérisé en ce que** les premières branches partielles (56₁ₐ, 56₂ₐ, 56₃ₐ, 56₄ₐ) s'étendent séparément les unes des autres dans le champ de rayonnement de pompage (20).

9. Système d'amplification de laser selon la revendication 8, **caractérisé en ce que** les premières branches partielles (56₁ₐ, 56₂ₐ, 56₃ₐ, 56₄ₐ) sont disposées les unes par rapport aux autres à distances angulaires autour d'un axe médian (42) du système de concentration (30).

10. Système d'amplification de laser selon l'une quelconque des revendications précédentes, **caractérisé en ce que** les secondes branches partielles (56_{1c}, 56_{2c}, 56_{3c}) s'étendent séparément les unes des autres.

11. Système d'amplification de laser selon l'une quelconque des revendications 8 à 10, **caractérisé en ce que** les deuxièmes branches partielles (56_{1c}, 56_{2c}, 56_{3c}) s'étendent séparément des premières branches partielles (56₁ₐ, 56₂ₐ, 56₃ₐ, 56₄ₐ).

12. Système d'amplification de laser selon la revendication 10 ou 11, **caractérisé en ce que** les deuxièmes branches partielles (56_{1c}, 56_{2c}, 56_{3c}) sont disposées les unes par rapport aux autres et par rapport aux premières branches partielles (56₁ₐ, 56₂ₐ, 56₃ₐ, 56₄ₐ) à distances angulaires autour de l'axe médian (42) du système de concentration (30).

13. Système d'amplification de laser selon l'une quelconque des revendications 3 à 12, **caractérisé en ce que** les au moins trois premières branches partielles (56₁ₐ, 56₂ₐ, 56₃ₐ) et les au moins trois deuxièmes branches partielles (56_{1c}, 56_{2c}, 56_{3c}) apparaissent lors d'un passage du champ de rayonnement de pompage (20) par le système de concentration (30) et le corps solide (10).

14. Système d'amplification de laser selon l'une quelconque des revendications précédentes, **caractérisé en ce que** les premières et les deuxièmes branches partielles (56₁ₐ, 56₂ₐ, 56₃ₐ, 56₄ₐ, 56_{1c}, 56_{2c}, 56_{3c}) apparaissant lors d'un passage du champ de rayonnement de pompage (20) par le système de concentration (30) sont disposées sans se chevaucher dans l'espace autour de l'axe médian (42) du système de concentration (30).

15. Système d'amplification de laser selon la revendication 13, **caractérisé en ce que** les premières et les deuxièmes branches partielles (56₁ₐ, 56₂ₐ, 56₃ₐ, 56₄ₐ, 56_{1c}, 56_{2c}, 56_{3c}) et la branche de rayonnement de pompage (26) d'un passage sont disposées sans se chevaucher dans l'espace autour de l'axe médian (42) du système de concentration (30).

16. Système d'amplification de laser selon l'une quelconque des revendications précédentes, **caractérisé en ce que** les premières et les deuxièmes branches partielles (56₁ₐ, 56₂ₐ, 56₃ₐ, 56₄ₐ, 56_{1c}, 56_{2c}, 56_{3c}) sont disposées respectivement dans le segment d'espace (32) autour de l'axe médian (42) du système de concentration (30) et s'étendent à l'intérieur des segments d'espace (32) transversalement à leur sens de propagation.

17. Système d'amplification de laser selon la revendication 15, **caractérisé en ce que** chacun des segments d'espace (32) s'étend à peu près sur la même zone angulaire autour de l'axe médian (42).

18. Système d'amplification de laser selon la revendication 16, **caractérisé en ce que** les segments d'espace (32) des premières et des deuxièmes branches partielles (56₁ₐ, 56₂ₐ, 56₃ₐ, 56₄ₐ, 56_{1c}, 56_{2c}, 56_{3c}) ainsi que le segment d'espace (32) de la branche de rayonnement de pompage (26) renferment essentiellement l'axe médian (42).

19. Système d'amplification de laser selon l'une quelconque des revendications précédentes, **caractérisé en ce que** le système de concentration (30) convertit une branche (54) sortant du corps solide (10) en une branche (56) collimatée intermédiaire et convertit de nouveau la branche collimatée intermédiaire (56) en une branche (52) concentrée sur celui-ci et entrant de nouveau dans le corps solide (10).

20. Système d'amplification de laser selon la revendication 19, **caractérisé en ce que** les branches (56) collimatées intermédiaires forment les premières et les deuxièmes branches partielles (56₁ₐ, 56₂ₐ, 56₃ₐ, 56₄ₐ, 56_{1c}, 56_{2c}, 56_{3c}).

21. Système d'amplification de laser selon la revendication 19 ou 20, **caractérisé en ce que** le système de concentration (30) présente des éléments (50₁ à 50ₙ) de collimation et de concentration qui convertissent les branches (54) sortantes en branches (56) collimatées intermédiaires ou les branches (56) collimatées intermédiaires en branches (52) entrantes.

22. Système d'amplification de laser selon la revendication 20 ou 21, **caractérisé en ce que** les unités de renvoi (60, 70) renvoient les branches (56) collimatées intermédiaires.

23. Système d'amplification de laser selon l'une quelconque des revendications précédentes, **caractérisé en ce qu'**une première branche partielle (56₄ₐ) collimatée, formée après un passage par le système de concentration (30) est convertie en une deuxième charge partielle (56_{4c}) coïncidant essentiellement avec la première charge partielle (56₄ₐ).

24. Système d'amplification de laser selon la revendication 23, **caractérisé en ce que** la deuxième charge partielle (56_{4c}) coïncidant essentiellement avec la première charge partielle (56₄ₐ) apparaît par la rétroréflexion (90) sur une surface réfléchissante plane.

25. Système d'amplification de laser selon la revendication 23, **caractérisé en ce que** la deuxième charge partielle (56_{4c}) coïncidant essentiellement avec la première charge partielle (56₄ₐ) est effectuée par la réflexion (90) sur un système réfléchissant (60, 70) de renvoi, qui conserve la symétrie.

26. Système d'amplification de laser selon l'une quelconque des revendications précédentes, **caractérisé en ce que** le système de concentration (30) présente au maximum deux unités de renvoi (60, 70) associées au corps solide (10), qui convertissent une première branche partielle (56₁ₐ, 56₂ₐ, 56₃ₐ) formée d'une branche (54) sortant de ce corps solide (10) en une deuxième branche partielle (56_{1c}, 56_{2c}, 56_{3c}) formant l'une des branches entrant dans ce corps solide.

27. Système d'amplification de laser selon l'une quelconque des revendications précédentes, **caractérisé en ce que** celui-ci comprend au moins deux corps solides (10₁, 10₂) et **en ce qu'**au moins une troisième unité de renvoi (100, 140) est prévue, laquelle renvoie une branche (56) du champ de rayonnement de pompage (20) transversalement à un autre plan de symétrie (108, 148) s'étendant entre les corps solides (10₁, 10₂).

28. Système d'amplification de laser selon l'une quelconque des revendications précédentes, **caractérisé en ce que** l'unité de renvoi (60, 70, 100, 140) comprend deux surfaces réfléchissantes (64, 66 ; 74, 76 ; 104, 106 ; 144, 146) s'étendant selon un angle l'une par rapport à l'autre.

29. Système d'amplification de laser selon la revendication 28, **caractérisé en ce que** les surfaces réfléchissantes (64, 66 ; 74, 76 ; 104, 106 ; 144, 146) sont disposées sur une unité de réflecteur (62, 72, 102, 142).

30. Système d'amplification de laser selon la revendication 29, **caractérisé en ce que** l'unité de réflecteur est un prisme (62, 72, 102, 142).

31. Système d'amplification de laser selon l'une quelconque des revendications précédentes, **caractérisé en ce que** les unités de renvoi (60, 70, 100, 140) forment un évidement (86), au travers duquel passent les branches (52, 54) entrant dans le corps solide (10) ou sortant de celui-ci.

32. Système d'amplification de laser selon l'une quelconque des revendications précédentes, **caractérisé en ce que** les unités de renvoi (60, 70, 100, 140) forment un évidement (80), au travers duquel une branche de rayonnement de pompage (26) entre dans le système de concentration (30).
